(19) **Europäisches Patentamt**
**European Patent Office**
**Office européen des brevets**

(11) **EP 4 266 087 A1**

(12) **EUROPEAN PATENT APPLICATION**
published in accordance with Art. 153(4) EPC

(43) Date of publication:
**25.10.2023 Bulletin 2023/43**

(21) Application number: **21919187.1**

(22) Date of filing: **31.12.2021**

(51) International Patent Classification (IPC):
**G01S 19/42** *(2010.01)*    **H04W 64/00** *(2009.01)*

(52) Cooperative Patent Classification (CPC):
**G01S 19/42; H04W 4/02; H04W 64/00; H04W 84/06**

(86) International application number:
**PCT/CN2021/143801**

(87) International publication number:
**WO 2022/152000 (21.07.2022 Gazette 2022/29)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **15.01.2021 CN 202110058045**

(71) Applicant: **Huawei Technologies Co., Ltd.**
**Shenzhen, Guangdong 518129 (CN)**

(72) Inventor: **WANG, Yu**
**Shenzhen, Guangdong 518129 (CN)**

(74) Representative: **Maiwald GmbH**
**Engineering**
**Elisenhof**
**Elisenstrasse 3**
**80335 München (DE)**

(54) **POSITIONING METHOD APPLIED TO NON-TERRESTRIAL NETWORK, AND COMMUNICATION APPARATUS**

(57)   This application provides a positioning method and a device. The method includes: Aterminal receives a first positioning signal sent by a first satellite by using a first beam, and receives a second positioning signal sent by at least one second satellite by using a second beam; and the terminal measures a positioning parameter based on the first positioning signal and the second positioning signal. The terminal is located within a coverage area of the first beam of the first satellite and a coverage area of the second beam of the at least one second satellite. The first satellite is a serving satellite of the terminal. The coverage area of the second beam is determined by the at least one second satellite based on positioning assistance information. The positioning assistance information includes a first reference location of the first beam. The first reference location is within the coverage area of the second beam and/or a second reference location of the second beam is within a coverage area of the first beam. According to the method, positioning performance of a non-terrestrial network can be ensured.

FIG. 6

EP 4 266 087 A1

**Description**

**TECHNICAL FIELD**

The present invention relates to the field of wireless communication, and in particular, to a positioning method in a non-terrestrial network and a communication apparatus.

**BACKGROUND**

Non-terrestrial networks (non-terrestrial networks, NTN) such as satellite communication have significant advantages such as global coverage, long-range transmission, flexible networking, easy deployment, and being not limited by geographical conditions, and have been widely used in various fields such as maritime communication, positioning and navigation, disaster relief, scientific experiments, video broadcasting, and earth observation. Terrestrial 5G networks and satellite networks are integrated and complement each other, forming a sea-land-air-space-ground integrated communication network that has global seamless coverage, and meeting various service requirements of users everywhere.

A next-generation satellite network tends to be ultra-dense and heterogeneous. First, a scale of the satellite network has increased from 66 satellites of the Iridium constellation to 720 satellites of the OneWeb constellation, and finally to 12,000+ ultra-dense low earth orbit satellites of the Starlink constellation. Second, the satellite network becomes heterogeneous, developing from a conventional single-layer communication network to a multi-layer communication network. A communication satellite network also tends to have sophisticated and diversified functions, and is gradually compatible with and supports functions such as navigation enhancement, ground observation, and multi-dimensional information in-orbit processing.

Satellite networks are highly dynamic. A moving speed of a typical low earth orbit (low earth orbit, LEO) satellite is about 7.5 km/s. For a satellite cell with a diameter of 20 km, a handover frequency for a user is about 23 times per minute. Due to a large propagation delay and a dynamic topology change in the NTN, a conventional ground positioning technology and protocol cannot be directly applied to a positioning scenario with a higher requirement.

**SUMMARY**

This application provides a positioning method, to ensure positioning performance of a non-terrestrial network NTN. The following describes this application from different aspects. It should be understood that mutual reference may be made to the following implementations and beneficial effects of the different aspects.

According to a first aspect, this application provides a positioning method in a satellite network. The method includes:

a first satellite sends a first positioning signal to a terminal by using a first beam of the first satellite, where the terminal is located within a coverage area of the first beam, and the first satellite is a serving satellite of the terminal;
the first satellite sends positioning assistance information to at least one second satellite, where the positioning assistance information includes a first reference location of the first beam;
the at least one second satellite determines a coverage area of a second beam of the second satellite based on the first reference location, and sends a second positioning signal to the terminal by using the second beam, where the first reference location of the first beam is within the coverage area of the second beam and/or a second reference location of the second beam is within the coverage area of the first beam; and
the terminal measures a positioning parameter based on the first positioning signal and the second positioning signal.

According to a second aspect, this application further provides a positioning method in a satellite network. The method includes:

a terminal receives a first positioning signal sent by a first satellite by using a first beam, and receives a second positioning signal sent by at least one second satellite by using a second beam; and
the terminal measures a positioning parameter based on the first positioning signal and the second positioning signal.

The terminal is located within a coverage area of the first beam of the first satellite and a coverage area of the second beam of the at least one second satellite. The first satellite is a serving satellite of the terminal. The coverage area of the second beam is determined by the at least one second satellite based on positioning assistance information. The positioning assistance information is sent by the first satellite to the at least one second satellite. The positioning assistance information includes a first reference location of the first beam. The first reference location is within the coverage area of the second beam and/or a second reference location of the second beam is within the coverage area of the first beam.

According to a third aspect, this application further provides a positioning method in a satellite network. The method includes:

a first satellite sends a first positioning signal to a terminal by using a first beam of the first satellite, where the terminal is located within a coverage area of the first beam, and the first satellite is a serving satellite of the terminal; and the first satellite sends positioning assistance information to at least one second satellite, where the positioning assistance information is used to determine a coverage area of a second beam of the at least one second satellite, the positioning assistance information includes a first reference location of the first beam, and the first reference location of the first beam is within the coverage area of the second beam and/or a second reference location of the second beam is within the coverage area of the first beam.

According to a fourth aspect, this application further provides a positioning method in a satellite network. The method includes:

at least one second satellite receives positioning assistance information sent by a first satellite, where the positioning assistance information includes a first reference location of a first beam of the first satellite; the at least one second satellite determines a coverage area of a second beam of the second satellite based on the positioning assistance information, where the first reference location of the first beam is within the coverage area of the second beam and/or a second reference location of the second beam is within a coverage area of the first beam; and the at least one second satellite sends a second positioning signal to a terminal by using the second beam, where the terminal is located within the coverage area of the first beam of the first satellite, and the first satellite is a serving satellite of the terminal.

According to a fifth aspect, this application provides a communication apparatus. The communication apparatus includes:

a receiving unit, configured for a terminal to receive a first positioning signal sent by a first satellite by using a first beam and a second positioning signal sent by at least one second satellite by using a second beam, where the first satellite is a serving satellite of the terminal, a coverage area of the second beam is adjusted by the at least one second satellite based on positioning assistance information, the positioning assistance information includes a first reference location of the first beam, and the first reference location of the first beam is within the coverage area of the second beam and/or a second reference location of the second beam is within a coverage area of the first beam; and a processing unit, configured for the terminal to measure a positioning parameter based on the first positioning signal and the second positioning signal.

According to a sixth aspect, this application provides a first satellite. The first satellite includes: a sending unit, configured to send a first positioning signal to a terminal by using a first beam, where the terminal is located within a coverage area of the first beam, and the first satellite is a serving satellite of the terminal.

The sending unit is further configured to send positioning assistance information to at least one second satellite. The positioning assistance information is used to determine a coverage area of a second beam of the at least one second satellite. The positioning assistance information includes a first reference location of the first beam. The first reference location of the first beam is within the coverage area of the second beam and/or a second reference location of the second beam is within the coverage area of the first beam.

According to a seventh aspect, this application provides a second satellite. The second satellite includes:

a receiving unit, configured to receive positioning assistance information sent by a first satellite, where the positioning assistance information includes a first reference location of a first beam of the first satellite; a processing unit, configured to determine a coverage area of a second beam of the second satellite based on the first reference location, where the first reference location of the first beam is within the coverage area of the second beam and/or a second reference location of the second beam is within a coverage area of the first beam; and a sending unit, configured to send a second positioning signal to a terminal by using the second beam of the second satellite, where the terminal is located within the coverage area of the first beam of the first satellite, and the first satellite is a serving satellite of the terminal.

According to an eighth aspect, this application provides a communication system, including a first satellite, at least one second satellite, and a terminal. The communication system includes:

the first satellite, configured to: send a first positioning signal to a terminal by using a first beam, where the terminal is located within a coverage area of the first beam, and the first satellite is a serving satellite of the terminal; and send positioning assistance information to the at least one second satellite, where the positioning assistance information includes a first reference location of the first beam;
the at least one second satellite, configured to: receive the positioning assistance information sent by the first satellite; determine a coverage area of a second beam of the second satellite based on the first reference location; and send a second positioning signal to the terminal by using the second beam, where the first reference location of the first beam is within the coverage area of the second beam and/or a second reference location of the second beam is within the coverage area of the first beam; and
the terminal, configured to: receive the first positioning signal sent by the first satellite and the second positioning signal sent by the second satellite; and measure a positioning parameter based on the first positioning signal and the second positioning signal.

The positioning methods and devices provided above can adapt to a large propagation delay and a dynamic topology change in a non-terrestrial network scenario, and improve positioning performance.

With reference to all the foregoing aspects, for example, the first reference location and the second reference location are determined according to a same rule, the first reference location is within the coverage area of the first beam, and the second reference location is located within the coverage area of the second beam.

For example, a distance between the second reference location and the first reference location is less than or equal to a preset threshold, and the preset threshold is less than a diameter of the first beam.

For example, the preset threshold is a radius of the first beam, one half of the radius of the first beam, one third of the radius of the first beam, one quarter of the radius of the first beam, or one eighth of the radius of the first beam.

For example, the first reference location is at a center point of the coverage area of the first beam, and the second reference location is at a center point of the coverage area of the second beam.

For example, the positioning assistance information includes power offset information. A transmit power of the second beam is determined by the at least one second satellite based on the power offset information, and the second positioning signal is sent at the transmit power. The power offset information can enable a beam hopping NTN positioning system to adjust a power of an assisting positioning beam, thereby improving positioning performance of the terminal.

For example, the positioning assistance information includes frequency offset information, and the second positioning signal is sent by the at least one second satellite at a frequency location determined based on the frequency offset information; and/or the positioning assistance information includes polarization mode information, and the second positioning signal is sent by the at least one second satellite based on the polarization mode information.

For example, the frequency offset information is determined from a preset first range, and frequency offset information used by the first beam to send the first positioning signal is different from frequency offset information used by the second beam to send the second positioning signal; and/or the polarization mode information is determined from a preset second range, and polarization mode information used by the first beam to send the first positioning signal is different from polarization mode information used by the second beam to send the second positioning signal. The frequency offset information and/or the polarization mode information are/is used to enable different positioning signals to have different frequency offsets and/or polarization modes, so that interference between transmission of positioning reference signals can be reduced.

For example, first time domain compensation information is determined by the first satellite, a first time domain location is determined by the first satellite based on the first time domain compensation information, the first positioning signal is sent at the first time domain location, and the first time domain compensation information is used to indicate a common offset of a measurement gap of the first satellite. Alternatively, the terminal receives the first time domain compensation information sent by the first satellite, and receives the first positioning signal at the first time domain location determined based on the first time domain compensation information.

For example, the positioning assistance information includes second time domain compensation information, a second time domain location is determined by the at least one second satellite based on the second time domain compensation information, the second positioning signal is sent at the second time domain location, and the second time domain compensation information is used to indicate a common offset of a measurement gap of the second satellite. Alternatively, the terminal receives the second time domain compensation information sent by the at least one second satellite, and receives the second positioning signal at the second time domain location determined based on the second time domain compensation information. The time domain compensation information is used to compensate for the measurement gap that needs to increase the common offset, so that the positioning method can be applied to a large delay scenario of NTN.

For example, the positioning parameter includes one or more of a time of arrival ToA, a frequency of arrival FoA, an angle of arrival AoA, and a signal strength of arrival SSoA.

For example, the terminal determines location information of the terminal based on the positioning parameter. Alternatively, the terminal receives reporting compensation information sent by the first satellite, determines a reporting parameter based on the reporting compensation information and the positioning parameter, and sends the reporting parameter to the first satellite. The first satellite determines the location information and sends the location information to the terminal, and the reporting compensation information is used to indicate a common offset of a reporting range of the positioning parameter. The reporting compensation information is used to solve a problem that a reporting range of positioning measurement is insufficient due to a large delay of NTN, so that the positioning method can be applied to an NTN scenario.

For example, the positioning assistance information is carried in a message such as a system information block SIB message or an inter-cell message XnAP message.

For example, the reporting compensation information is carried in a message such as a radio resource control RRC message or a system information block SIB message.

For example, the power offset information may be determined based on a power that is of the first beam and that is received by the terminal, a beam width of the second beam, a gain of a transmit end, a gain of a receive end, large-scale loss, other loss, and the like.

Optionally, the beam width of the second beam may be replaced with a parameter such as a beam opening angle of the second beam or the coverage area of the second beam.

For example, the second satellite may be a neighboring satellite of the first satellite.

According to a ninth aspect, this application provides a communication apparatus, configured to perform the method according to any one of the possible implementations of the first aspect to the fourth aspect. Specifically, the apparatus includes a unit configured to perform the method according to any one of the possible implementations of the first aspect to the fourth aspect.

Optionally, the communication apparatus includes a processor, configured to perform the method according to any one of the possible implementations of the first aspect to the fourth aspect. Specifically, the processor is a unit configured to perform the method according to any one of the possible implementations of the first aspect to the fourth aspect.

Optionally, the processor is configured to execute computer program instructions, to implement the method according to any one of the possible implementations of the first aspect to the fourth aspect, and specifically, to implement a unit configured to perform the method according to any one of the possible implementations of the first aspect to the fourth aspect.

Optionally, the computer program is stored in a memory.

Optionally, the memory is located within the communication apparatus.

Optionally, the memory is located outside the communication apparatus.

According to a tenth aspect, this application provides a computer-readable storage medium, configured to store a computer program. When the computer instructions are run on a computer, instructions for performing the method according to any one of the possible implementations of the first aspect to the fourth aspect are executed.

According to an eleventh aspect, an embodiment of this application provides a computer program product. The computer program product includes a computer program stored in a computer-readable storage medium, and the computer program may be loaded by a processor to implement the method according to any one of the possible implementations of the first aspect to the fourth aspect.

According to a twelfth aspect, this application provides a chip. The chip includes a logic circuit and an interface circuit. The logic circuit is configured to perform a measuring or determining step in the method according to any one of the possible implementations of the second aspect to the fourth aspect. The interface circuit is configured to perform a sending or receiving action in the method according to any one of the possible implementations of the second aspect to the fourth aspect. In this case, "sending" is equivalent to "output", and "receiving" is equivalent to "input". For example, when a chip is configured to perform the method according to the second aspect, a chip is provided, and the chip includes a first logic circuit and a first interface circuit. The first interface circuit is configured to input a first positioning signal sent by a first satellite by using a first beam and a second positioning signal sent by at least one second satellite by using a second beam. The first satellite is a serving satellite of a terminal. A coverage area of the second beam is adjusted by the at least one second satellite based on positioning assistance information. The positioning assistance information includes a first reference location of the first beam. The first reference location of the first beam is within the coverage area of the second beam and/or a second reference location of the second beam is within a coverage area of the first beam. The first logic circuit is configured to measure a positioning parameter based on the first positioning signal and the second positioning signal.

For another example, when the chip is configured to perform the method according to the third aspect, the chip includes a second interface circuit. The second interface circuit is configured to send the first positioning signal to the terminal by using the first beam. The terminal is located within the coverage area of the first beam, and the first satellite is a serving satellite of the terminal. The second interface circuit is further configured to send the positioning assistance information to the at least one second satellite. The positioning assistance information is used to determine the coverage area of the second beam of the at least one second satellite. The positioning assistance information includes the first reference location of the first beam. The first reference location of the first beam is within the coverage area of the second beam and/or the second reference location of the second beam is within the coverage area of the first beam.

For another example, when the chip is configured to perform the method according to the fourth aspect, the chip includes a second logic circuit and a third interface circuit. The third interface circuit is configured to receive the positioning assistance information sent by the first satellite. The positioning assistance information includes the first reference location of the first beam of the first satellite. The second logic circuit is configured to determine the coverage area of the second beam of the second satellite based on the first reference location. The first reference location of the first beam is within the coverage area of the second beam and/or the second reference location of the second beam is within the coverage area of the first beam.

According to a thirteenth aspect, this application provides a communication system. The communication system includes a first satellite, at least one second satellite, and a terminal. The terminal is configured to perform the method according to any one of the possible implementations of the second aspect. The first satellite is configured to perform the method according to any one of the possible implementations of the third aspect. The second satellite is configured to perform the method according to any one of the possible implementations of the fourth aspect. The communication system is configured to perform the method according to any one of the possible implementations of the first aspect.

For technical effects brought by any design in the ninth aspect to the thirteenth aspect, refer to technical effects brought by corresponding designs in the first aspect to the eighth aspect. Details are not described herein again.

**BRIEF DESCRIPTION OF DRAWINGS**

To describe the technical solutions in the embodiments of the present invention or in the background more clearly, the following briefly describes the accompanying drawings required for describing the embodiments of the present invention or the background.

FIG. 1 is a schematic diagram of an architecture of a satellite communication system according to an embodiment of this application;

FIG. 2 is a schematic diagram of a cellular PRS design pattern according to an embodiment of this application;

FIG. 3 is a schematic diagram of a beam hopping communication process according to an embodiment of this application;

FIG. 4A is a schematic diagram of another beam hopping communication process according to an embodiment of this application;

FIG. 4B is a schematic diagram of still another beam hopping communication process according to an embodiment of this application;

FIG. 5 is a schematic diagram of a positioning beam transmission and a related frame structure according to an embodiment of this application;

FIG. 6 is a schematic flowchart of a positioning method based on a beam hopping satellite system according to an embodiment of this application;

FIG. 7A is a schematic diagram of a beam coverage according to an embodiment of this application;

FIG. 7B is a schematic diagram of another beam coverage area according to an embodiment of this application;

FIG. 8A is a schematic diagram of still another beam coverage area according to an embodiment of this application;

FIG. 8B is a schematic diagram of yet another beam coverage area according to an embodiment of this application;

FIG. 8C is a schematic diagram of still yet another beam coverage area according to an embodiment of this application;

FIG. 9A is a schematic diagram of a satellite system without assisting positioning according to an embodiment of this application;

FIG. 9B is a schematic diagram of a satellite system with assisting positioning according to an embodiment of this application;

FIG. 10 is a schematic diagram of NTN beam hopping positioning according to an embodiment of this application;

FIG. 11 is a schematic diagram of calculating an NTN beam size according to an embodiment of this application;

FIG. 12A is a schematic diagram of a dynamic configuration method for a cell offset according to an embodiment of this application;

FIG. 12B is a schematic diagram of another dynamic configuration method for a cell offset according to an embodiment of this application;

FIG. 13 is a schematic diagram of a range reporting method according to an embodiment of this application;

FIG. 14 is a schematic diagram of a structure of a communication apparatus according to an embodiment of this application;

FIG. 15 is a schematic diagram of a structure of another communication apparatus according to an embodiment of this application;

FIG. 16 is a schematic diagram of a structure of still another communication apparatus according to an embodiment of this application;

FIG. 17 is a schematic diagram of a structure of yet another communication apparatus according to an embodiment of this application;

FIG. 18 is a schematic diagram of a structure of still yet another communication apparatus according to an embodiment of this application;

FIG. 19 is a schematic diagram of a structure of a further communication apparatus according to an embodiment of this application; and

FIG. 20 is a schematic diagram of a structure of a still further communication apparatus according to an embodiment of this application.

## DESCRIPTION OF EMBODIMENTS

The following describes in detail embodiments of this application with reference to accompanying drawings.

The technical solutions of this application may be applied to a satellite communication system, high-altitude platform station (high altitude platform station, HAPS) communication, an unmanned aerial vehicle, and other non-terrestrial network (non-terrestrial network, NTN) systems, for example, an integrated communication and navigation (integrated communication and navigation, IcaN) system and a global navigation satellite system (global navigation satellite system, GNSS). Alternatively, the non-terrestrial network NTN may be an SaT5G (Satellite and Terrestrial Network for 5G) or a system defined by the Space Communication Technical Committee (TC12). This is not limited in this application. The embodiments of this application are described by using a satellite communication system as an example.

The satellite communication system may be integrated with a conventional mobile communication system. Herein, the conventional mobile communication system may be a 4th generation (4th generation, 4G) communication system (for example, a long term evolution (long term evolution, LTE) system), a worldwide interoperability for microwave access (worldwide interoperability for microwave access, WiMAX) communication system, a 5th generation (5th Generation, 5G) communication system (for example, a new radio (new radio, NR) system), or a mobile communication system in the future.

The satellite communication system includes user equipment (UE) and network equipment. The user equipment may also be referred to as a terminal device, a user terminal, a mobile station, or the like. The network device may include one or more satellites or a terrestrial station device, and the terrestrial station device may also be referred to as a core network device. The satellite may be a low earth orbit (low earth orbit, LEO) satellite, a non-geostationary orbit (non-geostationary earth orbit, NGEO) satellite, or the like.

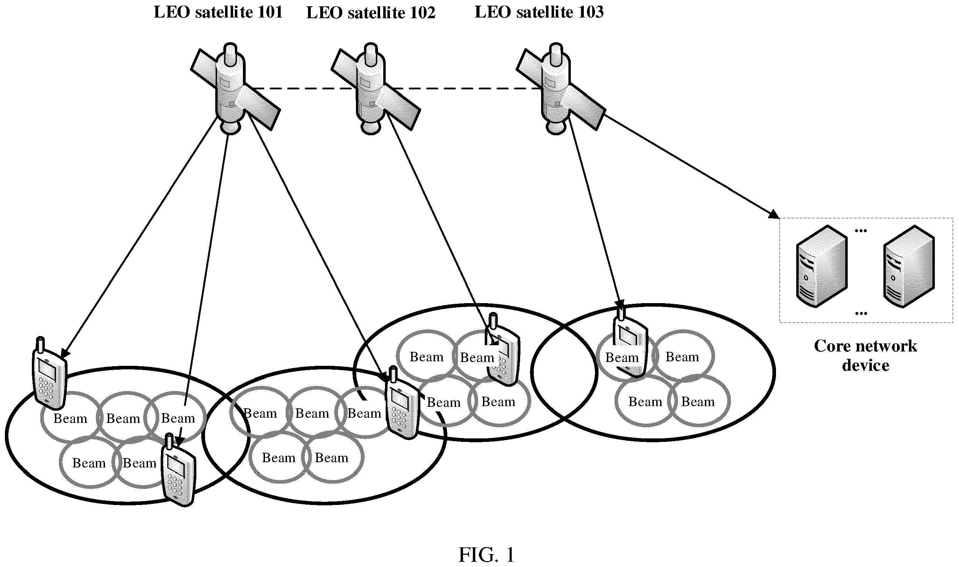

FIG. 1 is a schematic diagram of a satellite communication system according to an embodiment of this application. The satellite communication system includes a satellite 101, a satellite 102, and a satellite 103. Each satellite may provide a communication service, a navigation service, a positioning service, and the like for the terminal device by using a plurality of beams. The satellite 103 is connected to the terrestrial station device. In FIG. 1, an LEO satellite is used as an example. The satellite covers a service area by using the plurality of beams. Different beams may communicate with each other by using one or more of time division, frequency division, and space division. The satellite performs wireless communication with the terminal device by broadcasting a communication signal, a navigation signal, and the like, and the satellite may perform wireless communication with the terrestrial station device. The satellite mentioned in the embodiments of this application may be a satellite base station, or may include an orbit receiver or a repeater configured to relay information, or may be a network side device carried on a satellite.

The satellite communication system includes a transparent transmission satellite architecture and a non-transparent transmission satellite architecture. The transparent transmission is also referred to as bent-pipe forwarding transmission. To be specific, a signal is subjected only to frequency conversion, signal amplification, and the like on a satellite. The satellite is transparent to the signal as if it does not exist. The non-transparent transmission is also referred to as regenerative (on-board access/processing) transmission. To be specific, the satellite has some or all base station functions. For example, in FIG. 1, the satellite 101 and the satellite 102 have non-transparent transmission satellite architectures, and the satellite 103 has a transparent transmission satellite architecture.

The terminal device mentioned in the embodiments of this application includes various handheld devices having a wireless communication function, vehicle-mounted devices, wearable devices, computing devices, or other processing devices connected to a wireless modem, and may be specifically user equipment (user equipment, UE), an access terminal, a subscriber unit, a subscriber station, a mobile station, a mobile console, a remote station, a remote terminal, a mobile device, a user terminal, a terminal, a wireless communication device, a user agent, a user apparatus, or the like. Alternatively, the terminal device may be a satellite phone, a cellular phone, a smartphone, a wireless data card, a wireless modem, a machine type communication device, a cordless phone, a session initiation protocol (session initiation protocol, SIP) phone, a wireless local loop (wireless local loop, WLL) station, a personal digital assistant (personal digital assistant, PDA), a handheld device with a wireless communication function, a computing device, another processing device connected to a wireless modem, a vehicle-mounted device, a wearable device, a virtual reality (virtual reality, VR) terminal device, an augmented reality (augmented reality, AR) terminal device, a wireless terminal in industrial control (industrial control), a wireless terminal in self driving (self driving), a wireless terminal in remote medical (remote medical), a wireless terminal in a smart grid (smart grid), a wireless terminal in transportation security (transportation safety), a wireless terminal in a smart city (smart city), a wireless terminal in a smart home (smart home), a terminal device in a 5G network or a future communication network, or the like.

The terrestrial station device is, for example, a device in a core network (core network, CN) in an existing mobile communication architecture (for example, a 3GPP access architecture of a 5G network) or a device in a core network in a future mobile communication architecture. As a bearer network, the core network provides an interface to a data network, provides communication connection, authentication, management, and policy control for the user equipment (UE), bears data services, and the like. The CN may further include network elements such as an access and mobility management network element (Access and Mobility Management Function, AMF), a session management network element (Session Management Function, SMF), an authentication server network element (Authentication Server Function, AUSF), a policy control node (Policy control Function, PCF), and a user plane network element (User Plane Function, UPF). The AMF network element is configured to manage access and mobility of the UE, and is mainly responsible for functions such as UE authentication, UE mobility management, and UE paging.

The network device may further include but is not limited to: an evolved nodeB (evolved nodeB, eNB), a baseband unit (baseband unit, BBU), an access point (access point, AP) in a wireless fidelity (wireless fidelity, WIFI) system, a wireless relay node, a wireless backhaul node, a transmission point (transmission point, TP), a transmission reception point (transmission reception point, TRP), or the like. The network device may alternatively be a gNB (5G NodeB, or referred to as Next Generation NodeB) in a 5G system, a TRP, or a TP, or an antenna panel or a group of antenna panels (including a plurality of antenna panels) of a base station in the 5G system. In addition, the network device may alternatively be a network node that constitutes a gNB or a TP, for example, a BBU or a distributed unit (distributed unit, DU). Alternatively, the network device may be a device that bears a network side function in a communication system such as a device-to-device (device-to-device, D2D) communication system, a machine-to-machine (machine to machine, M2M) communication system, an Internet of Things (Internet of Things, IoT), or an Internet-of Vehicles communication system.

For brevity of this specification, this specification mainly describes the technical solution based on the satellite communication system shown in FIG. 1. A service scenario described in the embodiments of this application is intended to describe the technical solutions in the embodiments of this application more clearly, and does not constitute a limitation on the technical solutions provided in the embodiments of this application. A person of ordinary skill in the art may learn that as a new service scenario emerges, the technical solutions provided in the embodiments of this application are also applicable to a similar te chnical problem.

In the 3rd generation partnership project (3rd Generation Partnership Project, 3GPP) NR (New Radio) Rel-16 version, higher requirements are imposed on positioning of a terrestrial cellular network. For example, for 80% of indoor UE, horizontal and vertical positioning errors are required to be less than 3 m, and an end-to-end delay is required to be less than 1s. However, for a self-driving service, high positioning precision at a submeter level (for example, 10 cm) is required. A cellular positioning technology uses a method, for example, based on a signal strength of arrival (signal strength of arrival, SSoA), based on a signal angle of arrival (angle of arrival, AoA) and frequency of arrival (frequency of arrival, FoA), or based on a time of arrival (time of arrival, TOA). The following uses the TOA as an example for description. In a TOA-based positioning method, a distance to a signal source may be determined by measuring a time at which a signal arrives at a base station. That is, a signal location can be determined based on a distance between the signal source and each base station. The TOA-based positioning method has a high requirement on time synchronization between the signal source and each base station, but it is difficult to achieve precise synchronization between the base station and the signal source. To lower the requirement on time synchronization between the signal source and each base station, a TDoA (Time Difference of Arrival, TDoA) positioning method using a time difference is used. The TDoA-based positioning method determines a location of the signal source based on a time difference between signals received by a plurality of base stations.

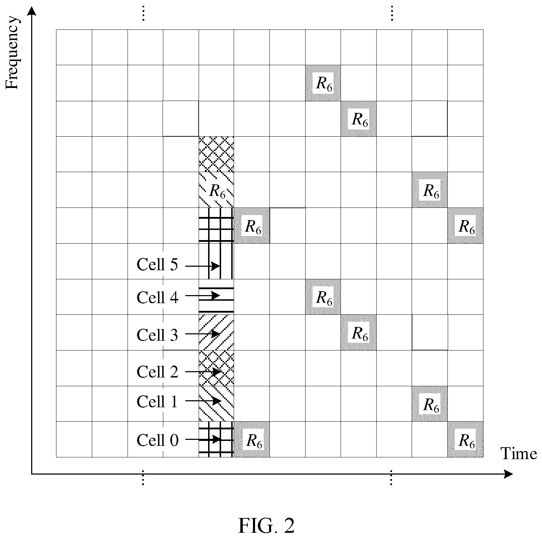

The cellular positioning technology is usually implemented by using a specific reference signal. For example, in an LTE system, the reference signal is referred to as a positioning reference signal (Positioning Reference Signal, PRS). In a current cellular network, a PRS is generated by using a Gold sequence with a length of 31, and the PRS is transmitted in several predefined consecutive subframes ($N_{PRS}$), which is referred to as a "PRS opportunity". The PRS opportunity may occur periodically at subframes of 160 ms, 320 ms, 640 ms, or 1280 ms. In other words, a PRS transmission periodicity is 160 ms, 320 ms, 640 ms, or 1280 ms, and a quantity of consecutive subframes $N_{PRS}$ may be 1, 2, 4, or 6. The reference signal is broadcast as required on a configured time-frequency resource by using a specific reuse pattern. A 6-color reuse mode is used in a frequency domain. That is, the PRS has six frequency shifts. A reuse mode of each cell is determined by a cell identifier PCI (Physical layer cell identity, PCI) modulo 6. If PCIs of two cells modulo 6 are the same, the two cells use a same reuse mode, resulting in a conflict. Therefore, it is recommended that the PCIs modulo 6 be different for neighboring cells. As shown in FIG. 2, a horizontal axis represents a time, and a vertical axis represents a frequency. In FIG. 2, time-frequency blocks of different shapes represent different reuse modes. To be specific, different cells transmit PRSs on different time-frequency resource blocks. R6 indicates that a PRS occupies an RE (resource element, RE) resource. In the figure, a minimum unit block is an RE resource, and one RE resource represents one symbol in a time domain and 12 subcarriers in a frequency domain. In addition, to avoid inter-cell interference, a PRS signal is transmitted on a low-interference subframe (Low-interference subframe, LIS). In another expression form, the PRS signal is designed as a low-interference subframe. Data is not transmitted on the LIS subframe. Therefore, in a case of ideal synchronization (that is, a time of each base station can be synchronized), PRS interference comes only from other PRS signals of an intra-frequency cell, where the other PRS signals modulo 6 are equal. In other words, the LIS subframe does not carry data of the UE, and a muting (muting) mechanism may be used for PRS signals of different cells, to further alleviate interference and ensure reliable transmission of PRS signals of a plurality of cells. The muting mechanism means that a cell may not send any signal on a specified time-frequency resource, to reduce interference to other cells.

In addition, a satellite positioning technology deploys a dedicated global navigation satellite system (Global Navigation Satellite System, GNSS) satellite constellation. Each satellite periodically broadcasts a reference signal generated based on its own clock. The UE receives reference signals of a plurality of satellites, and the reference signals of the plurality of satellites usually use code division multiple access, and calculate a pseudorange to obtain a location of the UE. The global navigation satellite system includes a GPS of the United States, a GLONASS of Russia, a GALILEO of the European Union, and a BeiDou navigation satellite system of China. The satellite constellation is a set of satellites that are launched into an orbit and can work properly. Usually, the satellite constellation is a satellite network formed by some satellite rings configured in a specific manner.

In the satellite positioning technology, advantages and disadvantages of a positioning method applied in an NTN network directly affect positioning performance and positioning precision of the entire NTN network. Because the NTN network has characteristics such as a dynamic topology change and a large transmission delay that are different from those of a terre strial network, a positioning method applicable in the terrestrial network and an existing terrestrial positioning protocol cannot be directly applied. This application provides a positioning method that can adapt to a non-terrestrial network, and the new positioning method can ensure positioning performance of the non-terrestrial network.

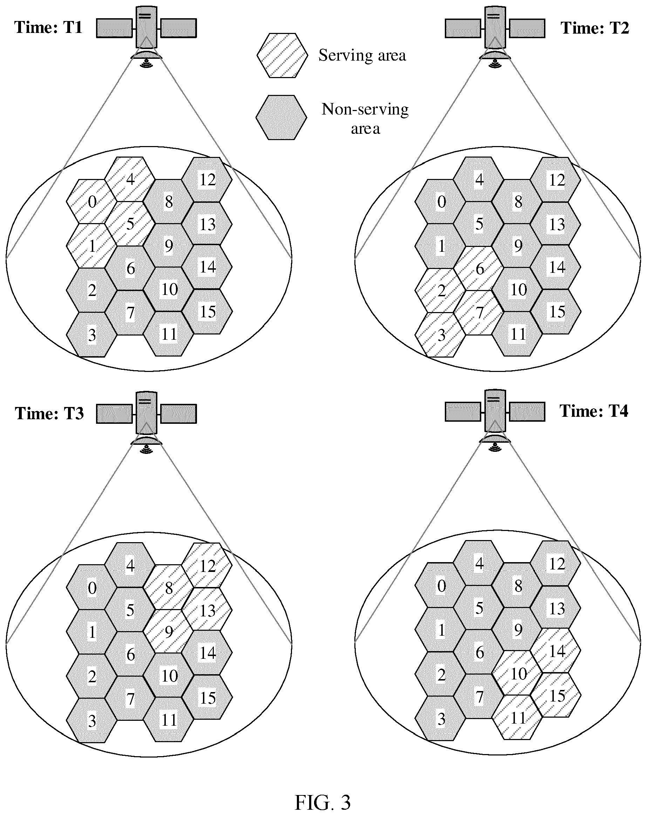

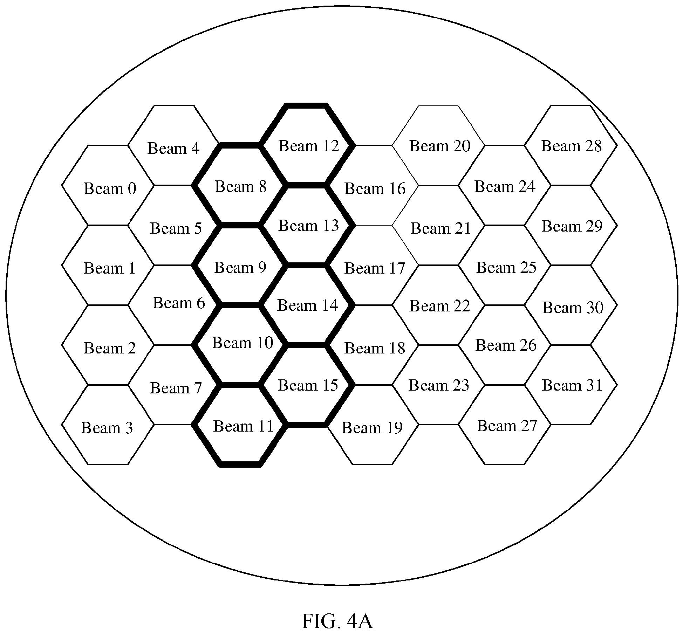

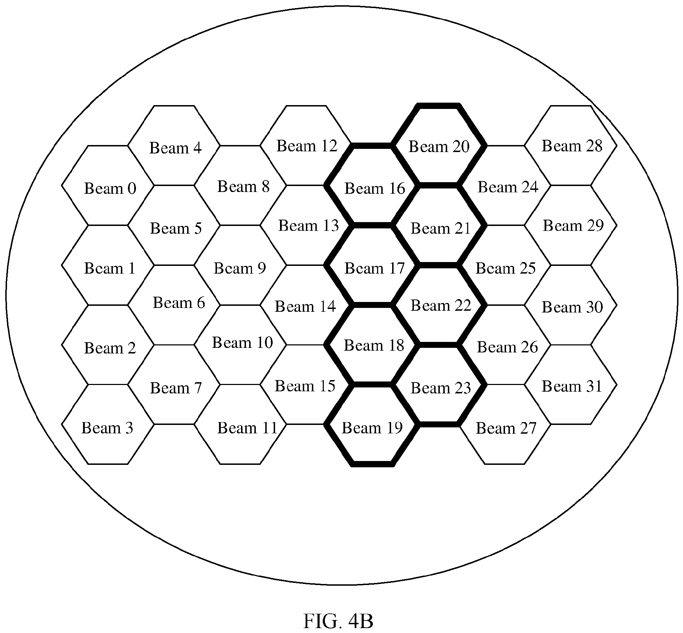

Generally, a single satellite has a wide coverage radius of thousands or even tens of thousands of kilometers, and a single beam has a minimum coverage radius of dozens or even thousands of kilometers. Therefore, to support wide-area coverage, a single high-throughput satellite usually needs to be equipped with hundreds or even thousands of beams, which poses a great challenge to the load of satellites, especially LEO satellites. To alleviate the contradiction between small load and wide co verage area of a single satellite, a beam hopping satellite system (or a satellite beam hopping system) emerges, and a beam hopping manner may be used to cover an area. Specifically, in the beam hopping satellite system, a single satellite may be configured with a large quantity of beams to cover a wide area. However, only a small quantity of beams are used in a same time unit to cover an area, and a plurality of beams are used in different time units to cover a wide area. In other words, a single satellite is equipped with only a small number of beams (for example, dozens of beams), and the beams serve all coverage areas of the single satellite in a time division manner. As shown in FIG. 3, a satellite can form only four beams at a same time. At a time T1, four beams 0, 1, 4, and 5 are used to cover an area corresponding to the satellite. At a time T2, four beams 2, 3, 6, and 7 are used to cover an area corresponding to the satellite. By analogy, all areas (that is, areas corresponding to 16 beams) covered by a single satellite are served in a time division manner of T1, T2, T3, and T4. For another example, a satellite is configured with 32 beams to cover a wide area, and only eight beams are used in a time unit to cover an area. In a time unit T1, as shown in FIG. 4A, eight beams numbered 8 to 15 are used to cover an area. In a time unit T2, as shown in FIG. 4B, eight beams numbered 16 to 23 are used to cover an area. By analogy, all areas (that is, areas corresponding to 32 beams) covered by a single satellite are served in a time division manner of T1, T2, T3, and T4, and the 32 beams may be transmitted within four slots.

In this embodiment of this application, time division multiplexing is used as an example to describe the beam hopping satellite system. Time division multiplexing means that different signals are transmitted in different time periods of a same physical connection, which can also achieve multi-channel transmission. In time division multiplexing, time is used as a parameter for signal partitioning. Therefore, all channels of signals cannot overlap with each other along a time axis. Optionally, the beam hopping satellite system may further be designed based on space division multiplexing, frequency division multiplexing, polarization reuse, or the like, which is not limited in this application.

In a satellite communication network, a plurality of beams are configured in a satellite, and each beam may be considered as a beam in a cell or a separate cell. According to a conventional terrestrial network, each base station serves a specific cell, and the base station and the cell are usually in a fixed relationship. Similarly, if such a relationship is followed, an area served by a beam of each satellite is also in a fixed relationship. However, in the positioning provided in this application, beam hopping is used to assist in positioning.

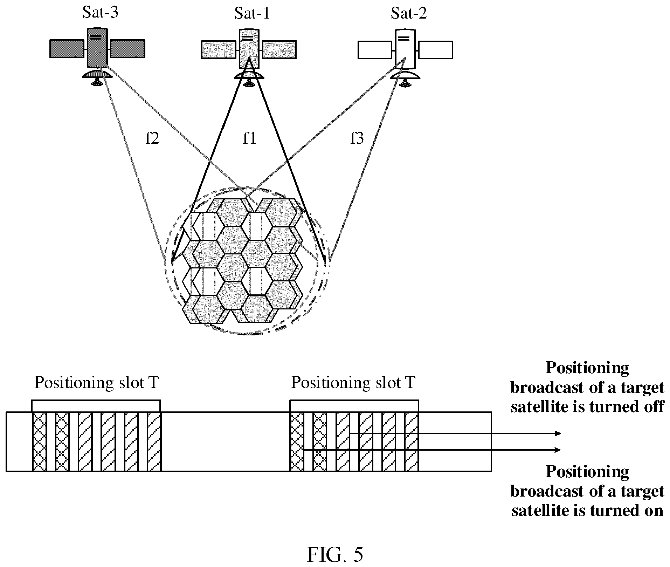

When the beam hopping satellite system is applied in positioning, beam hopping means that different satellites dynamically adjust their beam directions to assist UE in different target areas in positioning. To be specific, in addition to providing a beam for a serving cell, the satellite further provides a beam to strike a coverage area of a neighboring satellite. In this application, a beam cast by the satellite to the coverage area of the neighboring satellite is referred to as an assisting beam. The assisting beam is a beam generated after a related parameter of a beam cast by the satellite to the serving cell changes. The related parameter includes one or more of the following parameters: a steering angle, a frequency, a power, a beam shape, and an antenna gain. As an example rather than a limitation, in this application, a change of the steering angle is used as an example for detailed description. To be specific, when positioning is performed on a terminal device, in addition to a beam steering angle of a serving satellite of a cell in which the terminal device is located, a beam steering angle of a neighboring satellite around the serving satellite of the cell changes, and the beam strikes the cell in which the terminal device is located, so that the cell is covered by a plurality of satellites at the same time, thereby completing a positioning function and improving positioning precision. Specifically, a corresponding positioning beam transmission and a frame structure thereof are shown in FIG. 5. A satellite 1 is used as an example. A positioning time duration T includes six slots. The satellite 1 (sat-1) turns on positioning broadcast in the first two slots (for example, double-slash striped slots in the figure) of the positioning time duration T, but mutes the positioning broadcast in the subsequent slots (for example, left-slash striped slots in the figure) and adjusts its beam to help a neighboring satellite in positioning. Similarly, a satellite 2 and a satellite 3 separately turn on their own positioning broadcast in corresponding slots, mute the positioning broadcast in another time duration, and adjust beams to help a neighboring satellite in positioning.

The neighboring satellite in this application may also be referred to as a neighbor satellite, an adjacent satellite, an assisting satellite, or the like, which is not limited herein.

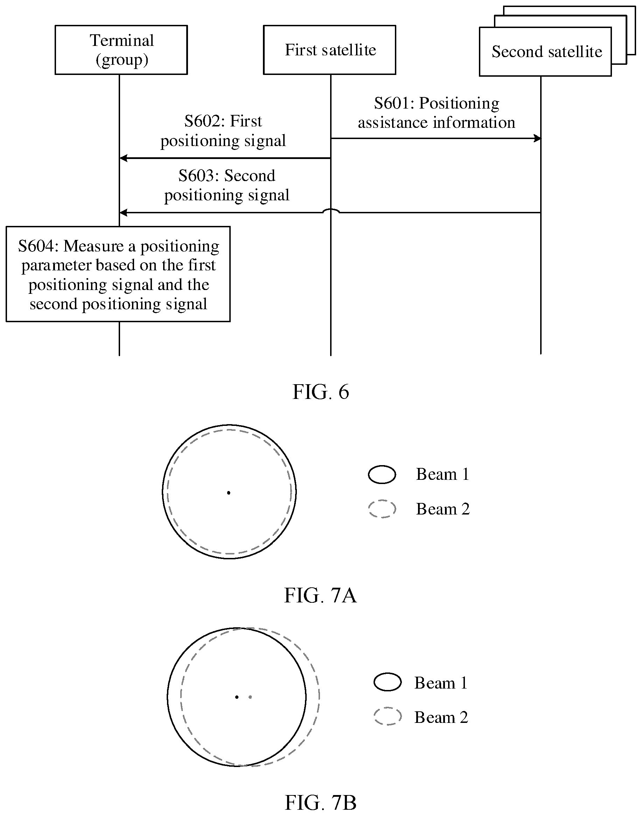

FIG. 6 is a schematic flowchart of a positioning method 600 based on a beam hopping satellite system for a terminal device according to an embodiment of this application. The indicated method 600 includes but is not limited to the following steps.

S601: A first satellite sends positioning assistance information to at least one second satellite, where the positioning assistance information includes a first reference location of the first beam.

S602: The first satellite sends a first positioning signal to the terminal by using the first beam of the first satellite.

S603: The at least one second satellite determines a coverage area of a second beam of the second satellite based on the first reference location, and sends a second positioning signal to the terminal by using the second beam, so that the first reference location of the first beam is within the coverage area of the second beam and/or a second reference location of the second beam is within a coverage area of the first beam.

S604: The terminal measures a positioning parameter based on the first positioning signal and the second positioning signal.

It should be understood that the first satellite herein is a target satellite, that is, a serving satellite of the terminal device. The second satellite is a neighboring satellite of the first satellite, that is, a neighboring satellite of the target satellite.

Before step S601 is performed, UE may send a positioning request to the target satellite, or the target satellite may periodically send a broadcast signal.

After the target satellite receives the positioning request from the terminal device or before the target satellite periodically sends the broadcast signal, the target satellite sends the positioning assistance information to one or more neighboring satellites.

The positioning assistance information includes a first reference location, power offset information, frequency offset information, polarization mode information, and second time domain compensation information.

First reference location: The first reference location is within the coverage area of the first beam, and is determined by the first satellite. The at least one second satellite adjusts the coverage area of the second beam of the second satellite based on the first reference location, so that the first reference location of the first beam is within the coverage area of the second beam and/or the second reference location of the second beam is within the coverage area of the first beam. The first reference location is located within the coverage area of the first beam, the second reference location is within the coverage area of the second beam, and the first reference location of the first beam and the second reference location of the second beam are determined according to a same rule. A distance between the second reference location of the second beam and the first reference location of the first beam is less than or equal to a preset threshold, and the preset threshold is less than a diameter of the first beam. The preset threshold includes any one of a radius of the first beam, one half of the radius of the first beam, one third of the radius of the first beam, one quarter of the radius of the first beam, or one eighth of the radius of the first beam, or the preset threshold is another value less than the diameter of the first beam.

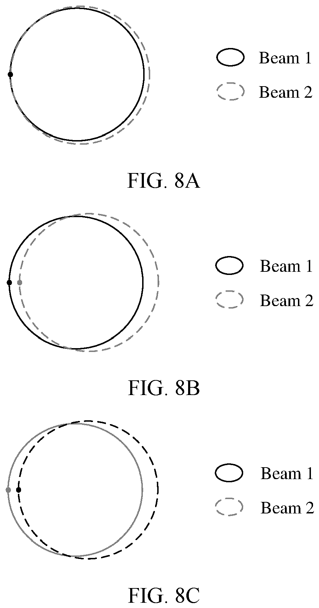

A reference location may also be referred to as a reference point, a positioning reference point, reference information, or the like, and includes an indication form of any information or signaling used to indicate the reference location. The reference location may be any location in a target area. The target area is a cell in which the terminal is located or an area covered by a beam. The reference location may be a center point of the target area, any point on an edge of the target area, or the like. Because the first reference location and the second reference location are determined according to the same rule, in a possible implementation, if the first reference location of the first beam is a center point of the coverage area of the first beam, the second reference location of the second beam is a center point of the coverage area of the second beam. FIG. 7A shows a case in which the first reference location of the first beam coincides with the second reference location of the second beam. FIG. 7B shows a case in which the distance between the first reference location of the first beam and the second reference location of the second beam is less than or equal to the threshold. Selection of the threshold is described above. In another possible implementation, if the first reference location of the first beam is a left edge point of the coverage area of the first beam, the second reference location of the second beam is a left edge point corresponding to the coverage area of the second beam. FIG. 8A shows a case in which the first reference location of the first beam coincides with the second reference location of the second beam. FIG. 8B and FIG. 8C show cases in which the distance between the first reference location of the first beam and the second reference location of the second beam is less than or equal to the threshold. FIG. 8B shows a case in which the second reference location of the second beam is within the coverage area of the first beam, and FIG. 8C shows a case in which the first reference location of the first beam is within the coverage area of the second beam. In this application, the foregoing is merely an example for description, and does not constitute a limitation. In a possible implementation, the coverage area of the second beam may include the coverage area of the first beam, or the coverage area of the first beam may include the coverage area of the second beam, or the coverage area of the second beam may include most of the coverage area of the first beam, or the coverage area of the first beam may include most of the coverage area of the second beam. The foregoing cases may occur in actual situations, and are not limited in this application, provided that a to-be-positioned device can achieve good positioning precision.

This application is described by using an example in which a shape of the coverage area of the first beam is the same as that of the coverage area of the second beam and a size difference is not large. If the shape of the coverage area of the first beam is different from that of the coverage area of the second beam, or the size difference between coverage areas of the first beam and the second beam is large, adaptive modification may be made with reference to the description of the embodiments provided in this application. This is not limited herein.

Power offset information: The at least one second satellite determines a transmit power of the second beam based on the power offset information, and the second positioning signal is sent at the transmit power. The power offset information is determined based on a power that is of the first beam and that is received by the terminal, a beam width of the second beam, a gain of a transmit end, a gain of a receive end, large-scale loss, and other loss. Optionally, the beam width of the second beam may be replaced with a parameter such as a beam opening angle of the second beam or the coverage area of the second beam. The power offset information can enable a beam hopping NTN positioning system to adjust a power of an assisting positioning beam, thereby improving positioning performance of the terminal.

The positioning assistance information includes one or two of frequency offset information or polarization mode information. If the positioning assistance information includes the frequency offset information, the at least one second satellite determines a sending frequency location based on the frequency offset information, and the second positioning signal is sent at the frequency location. The frequency offset information is determined from a preset frequency offset range. To be specific, frequency offset information used by the first beam to send the first positioning signal is different from frequency offset information used by the second beam to send the second positioning signal. If the positioning assistance information includes the polarization mode information, the at least one second satellite determines a sending polarization mode based on the polarization mode information, and the second positioning signal is sent in the polarization mode. The polarization mode information is determined from a preset polarization mode range. To be specific, a polarization mode used by the first beam to send the first positioning signal is different from a polarization mode used by the second beam to send the second positioning signal. The frequency offset information and/or the polarization mode information are/is used to enable different positioning signals to have different frequency offsets and/or polarization modes, so that interference between transmission of positioning reference signals can be reduced.

Second time domain compensation information: The at least one second satellite determines a time domain location based on the second time domain compensation information, the second positioning signal is sent at the time domain location, and the second time domain compensation information is used to indicate a common offset of a measurement gap. Alternatively, the terminal receives the second time domain compensation information sent by the at least one second satellite, and receives the second positioning signal at the time domain location determined based on the second time domain compensation information. The time domain compensation information is used to compensate for the measurement gap that needs to increase the common offset, so that the positioning method can be applied to a large delay scenario of NTN.

The first satellite sends the first positioning signal to the terminal by using the first beam of the first satellite. The at least one second satellite adjusts, based on the positioning assistance information, the coverage area of the second beam used by the at least one second satellite to send the second positioning signal. The at least one second satellite determines a frequency domain location, the time domain location, the transmit power, and the like that are used to send the second positioning signal, and sends the second positioning signal to the terminal by using the second beam. The coverage area of the second beam is determined based on the first reference location, so that the first reference location of the first beam is within the coverage area of the second beam and/or the second reference location of the second beam is within the coverage area of the first beam. The coverage area may be in a shape such as a circle, an ellipse, or a rectangle. In this embodiment of this application, description is made by using an example in which the coverage area is in a shape of a circle. However, this is not limited herein.

The first satellite sends the first positioning signal to the terminal by using the first beam of the first satellite. The first satellite determines first time domain compensation information, the first satellite determines a first time domain location based on the first time domain compensation information, the first positioning signal is sent at the first time domain location, and the first time domain compensation information is used to indicate a common offset of a measurement gap of the first satellite. Alternatively, the terminal receives the first time domain compensation information sent by the first satellite, and receives the first positioning signal at the first time domain location determined based on the first time domain compensation information. The time domain compensation information is used to compensate for the measurement gap that needs to increase the common offset, so that the positioning method can be applied to a large delay scenario of NTN.

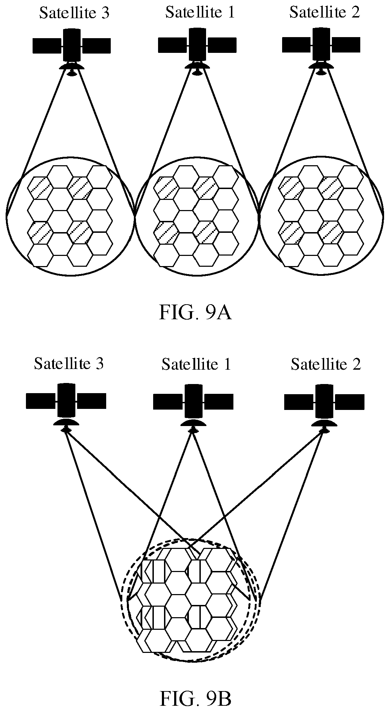

FIG. 9A is a schematic diagram before the first satellite sends the positioning assistance information to the second satellite, and FIG. 9B is a schematic diagram after the first satellite sends the positioning assistance information to the second satellite. FIG. 9A and FIG. 9B are used as an example. After a satellite 2 and a satellite 3 receive positioning assistance information from a satellite 1, steering angles of their beams change, to assist a terminal device or a terminal device group in a coverage area of the satellite 1 in positioning.

In this embodiment of this application, the steps are not necessarily performed according to a fixed time sequence or a fixed execution sequence. For example, in step S602, the first satellite sends the first positioning signal to the terminal by using the first beam of the first satellite, and in step S603, the at least one second satellite adjusts, based on the positioning assistance information, the second beam used by the at least one second satellite to send the second positioning signal, and sends the second positioning signal to the terminal by using the second beam. The first positioning signal and the second positioning signal arrive at the terminal at almost the same time. Therefore, steps S602 and S603 herein are merely for the purpose of clear and convenient description, and are not necessarily performed according to a fixed time sequence or a fixed execution sequence.

Optionally, the positioning assistance information includes but is not limited to a broadcast system information block (system information block, SIB) message and an inter-cell message XnAP message.

The terminal measures the positioning parameter based on the first positioning signal and at least one second positioning signal. Optionally, a positioning parameter value includes one or more of a time of arrival ToA, a frequency of arrival FoA, an angle of arrival AoA, and a signal strength of arrival SSoA.

In an implementation, the terminal determines location information of the terminal based on the positioning parameter. In another implementation, the terminal receives reporting compensation information sent by the first satellite, determines a reporting parameter based on the reporting compensation information and the positioning parameter, and sends the reporting parameter to the first satellite. The reporting parameter is determined by the positioning parameter based on the reporting compensation information. The first satellite determines the location information of the terminal based on the received reporting parameter, and sends the location information to the terminal. The reporting compensation information is used to indicate a common offset of a reporting range of the positioning parameter. The reporting compensation information is used to solve a problem that a reporting range of positioning measurement is insufficient due to a large delay of NTN, so that the positioning method can be applied to an NTN scenario.

Optionally, the reporting compensation information is carried in a message, including but not limited to a radio resource control RRC message and a system information block SIB message.

In this application, the second beam sent by the second satellite is referred to as the assisting positioning beam. This is not limited herein.

The broadcast signal or the positioning beam in this application may be a communication broadcast signal, a positioning broadcast signal, or the like. The communication broadcast signal may be a synchronization signal block (synchronization signal and PBCH block, SSB) or an integrated broadcast signal, and the positioning broadcast signal may be an SSB, a positioning reference signal (positioning reference signal, PRS), an integrated broadcast signal, or the like. A signal type of a positioning beam of an original satellite in which the to-be-positioned terminal device is located may be the same as or different from a signal type of the assisting positioning beam.

Optionally, when a location change of the terminal device is greater than a given threshold and/or a signal quality of a serving cell is less than a given threshold, a mobility management procedure may be initiated on the terminal device based on the positioning method provided above. That is, the terminal performs cell reselection, cell handover, tracking area update, and the like based on its own location information.

The positioning method provided in this application can adapt to a large propagation delay and a dynamic topology change in a non-terrestrial network NTN, and ensure positioning performance of the non-terrestrial network.

In this embodiment of this application, a power configuration method for a beam hopping NTN system is provided. Specifically, when a serving satellite performs positioning on a terminal device, a neighboring satellite of the serving satellite assists in the positioning, to improve positioning performance. To be specific, different beams simultaneously strike at a positioning reference point of a target area, and the target area is a cell in which to-be-positioned UE is located. The positioning reference point is the first reference location or the second reference location, or may be any location of the target area, for example, a center point of the target area. When the neighboring satellite of the serving satellite performs assisting positioning, a beam steering angle of the neighboring satellite changes. To be specific, a coverage area of an assisting positioning beam of the neighboring satellite is determined based on the first reference location, so that the first reference location is within the coverage area of the assisting positioning beam, or the second reference location of the assisting positioning beam is within a coverage area of a positioning beam of the serving satellite, or both the foregoing two cases are met. In this case, in this application, it may be understood that the coverage area of the assisting positioning beam of the neighboring satellite substantially overlaps with the coverage area of the positioning beam of the serving satellite. The positioning beam of the serving satellite is a first beam, and the assisting positioning beam is a second beam.

In this embodiment of this application, description is made by using an example in which the first reference location coincides with the second reference location. This is not limited herein. Because the assisting positioning beam strikes at the reference point of the target area from different angles, a propagation path length of the assisting positioning beam differs greatly from a path length of the positioning beam of the serving satellite, and energy loss of the beam is large. Therefore, to enable a power at which the assisting positioning beam of the adjacent satellite strikes at the reference point to be the same as one or more of a power, a signal-to-noise ratio, and a signal-to-interference ratio of the positioning beam of the serving satellite, frequency offsets Power_offset of different beams need to be set. In other words, a serving satellite of a cell uses beams of different steering angles to assist positioning of UE in a serving cell of another neighboring satellite, and different beams and corresponding power offsets Power_offset are set, to ensure that one or more of the power, the signal-to-noise ratio, a signal to interference plus noise ratio of the assisting positioning beam and the positioning beam of the serving satellite of the assisting positioning cell at a terrestrial reference point of the assisting positioning cell are the same.

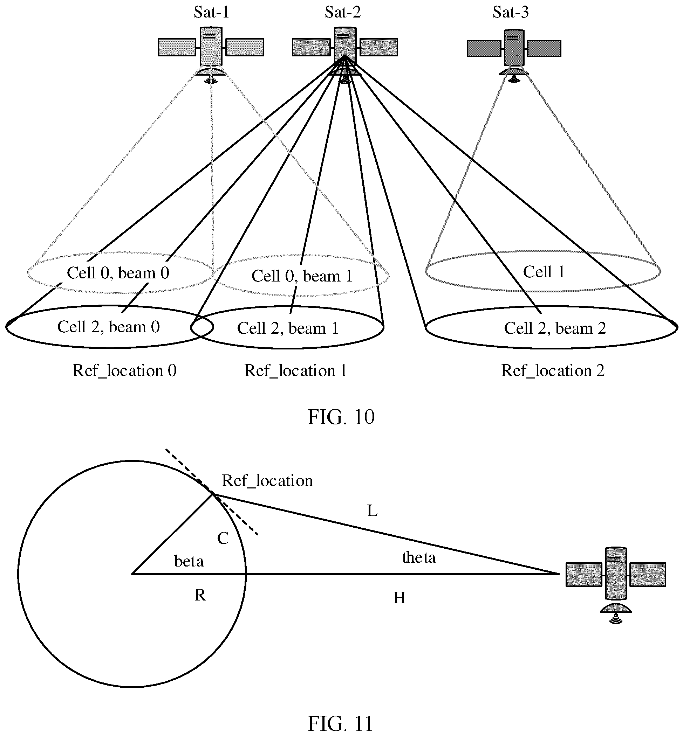

FIG. 10 is a schematic diagram of beam hopping based positioning in a multi-satellite scenario. In the figure, (cell x, beam y) represents a cell x of a satellite, and a beam y, where x is a cell number, and y is a beam number. A satellite 2 uses a beam (cell 2, beam 0) to assist UE in a satellite 1 (cell 0, beam 0) in positioning, the satellite 2 uses a beam (cell 2, beam 1) to assist the satellite 1 (cell 0, beam 1) in positioning, and the satellite 2 uses a beam (cell 2, beam 2) to assist a satellite 3 (cell 1) in positioning. It can be learned from beam names (cell 0, beam 0) and (cell 0, beam 1) of the satellite 1 that the beam 0 and the beam 1 are beams in a same cell of the satellite 1, and the cell 0 is a cell identifier of the satellite 1. It can be learned from beam names (cell 2, beam 0), (cell 2, beam 1), and (cell 2, beam 2) of the satellite 2 that the beam 0, the beam 1, and the beam 2 are beams in a same cell of the satellite 2, and the cell 2 is a cell identifier of the satellite 2. It can be learned from the cell 1 of the satellite 3 that the beam is a separate cell, and the cell 3 is a cell identifier of the satellite 3. There is no association relationship between the cell identifier (cell 0, cell 1, ...) and the beam number (beam 0, beam 1, ...) in each satellite. It can be learned from the provided schematic diagram of beam hopping positioning that assisting positioning may be performed at a beam level. For example, the satellite 2 uses the beam (cell 2, beam 0) to assist the satellite 1 (cell 0, beam 0) in positioning, and the satellite 2 uses the beam (cell 2, beam 1) to assist the satellite 1 (cell 0, beam 1) in positioning. The assisting positioning may alternatively be performed at a cell level. For example, the satellite 2 uses the beam (cell 2, beam 2) to assist the satellite 3 (cell 1) in positioning. This is not limited in this application.

As shown in FIG. 10, the satellite 2 uses the beam (cell 2, beam 0) to assist the satellite 1 (cell 0, beam 0) in positioning, and a schematic diagram of a beam of the assisting positioning beam (cell 2, beam 0) of the satellite 2 is provided, as shown in FIG. 11. The satellite 2 aligns a center of the positioning beam (cell 2, beam 0) with the positioning reference point of the target area in which the to-be-positioned UE is located, and the positioning reference point is determined by the satellite 1 (cell 0, beam 0). To be specific, the satellite 2 adjusts a coverage area of the positioning beam (cell 2, beam 0) based on the positioning reference point, so that the coverage area of the positioning beam (cell 2, beam 0) substantially overlaps with a coverage area of the satellite 1 (cell 0, beam 0). In an implementation, the positioning reference point is Ref_location_0. That is, the satellite 2 aligns the center of the beam (cell 2, beam 0) with Ref_location_0. In another implementation, an elevation angle Ref_ele_0 of a target beam and an azimuth angle Ref_azi_0 of the target beam may be set, so that the coverage area of the positioning beam (cell 2, beam 0) of the satellite 2 substantially overlaps with the coverage area of the satellite 1 (cell 0, beam 0).

A beam width of the positioning beam of the satellite 2 is Beamwidth_0. In an implementation, the beam width may be determined by a beam opening angle beta and the radius R of the earth. In another implementation, the beam width is determined by a radius (or a diameter) of the coverage area, and the coverage area is an area in which the beam strikes on the ground, that is, the target area in which the to-be-positioned UE is located. Specifically, if Beamwidth_0 = C, as shown in FIG. 11, the beam width Beamwidth_0 and a path length L of the positioning beam to the reference point may be calculated by using the following formulas:

$$C = R*beta$$

$$\sin(\text{theta})/\sin(\text{theta}+\text{beta}) = R/(R+H)$$

$$L/R = \sin(\text{beta})/\sin(\text{theta})$$

R is the radius of the earth, H is an orbital height of the satellite, and theta is an included angle between a line connecting the satellite with a reference point Ref_location and a line connecting the satellite with the center of the earth, or may be referred to as a deviation angle of the positioning beam of the neighboring satellite.

If a power at which the positioning beam of the serving satellite (the satellite 1) strikes at the reference point is P0, a power offset (or a power) Power_offset_0 of the assisting positioning beam of the satellite 2 is set in the following manner:

$$P0 = Power\_offset\_0 + Tx\_gain - Path\_loss(f0, L) - Other\_loss + Rx\_gain;$$

or

$$Power\_offset\_0 = P0 - Tx\_gain + Path\_loss(f0, L) + Other\_loss - Rx\_gain.$$

Tx_gain and Rx_gain are respectively a gain of a transmit end and a gain of a receive end. Path_loss is large-scale loss, and is related to a center frequency f0 and the path length L. Other_loss is loss other than the large-scale loss, such as atmosphere, rain fade, and shadow fading.

In conclusion, power offset information of any neighboring satellite of any serving satellite may be determined. The satellite 2 described above as an example uses the beam (cell 2, beam 0) to assist the satellite 1 (cell 0, beam 0) in positioning. Power offset information of the satellite 2 includes but is not limited to the reference point Ref_location_0.

That is, the satellite 2 aligns the center of the beam with Ref_location_0 (or sets the elevation angle and the azimuth angle of the target beam to Ref_ele_0 and Ref_azi_0 respectively). A target beam width Beamwidth_0 can be replaced with the beam opening angle and the radius (diameter) of the coverage area. A power offset Power_offset_0 is a power offset of the assisting positioning beam transmitted by satellite 2.

Optionally, in FIG. 10, the satellite 2 uses the beam (cell 2, beam 1) to assist the satellite 1 (cell 0, beam 1) in positioning. A method for determining power offset information of the satellite 2 is described above. Because parameters, such as an included angle and a path length of an assisting beam of a current neighboring satellite striking a cell covered by a current serving satellite, may be different, the power offset information also varies with the serving satellite and the neighboring satellite. The power offset information used by the satellite 2 to assist the satellite 1 (cell 0, beam 1) in positioning by using the beam (cell 2, beam 1) includes but is not limited to a reference point Ref_location_1. That is, the satellite 2 aligns a center of the beam with Ref_location_1 (or sets an elevation angle and an azimuth angle of the target beam to Ref_ele_1 and Ref_azi_1 respectively). A target beam width Beamwidth_1 can be replaced with the beam opening angle and the radius (diameter) of the coverage area. A power offset Power_offset_1 is a power offset of the assisting positioning beam transmitted by satellite 2.

Optionally, in FIG. 10, the satellite 2 uses the beam (cell 2, beam 2) to assist the satellite 3 (cell 1) in positioning. The power offset information of the satellite 2 includes but is not limited to a reference point Ref_location_2. That is, the satellite 2 aligns a center of the beam with Ref_location_2 (or sets an elevation angle and an azimuth angle of the target beam to Ref_ele_2 and Ref_azi_2 respectively). A target beam width Beamwidth_2 can be replaced with the beam opening angle and the radius (diameter) of the coverage area. A power offset Power_offset_2 is a power offset of the assisting positioning beam transmitted by satellite 2.

In the positioning assistance information, the power offset information of the assisting positioning beam of the to-be-positioned UE may be transmitted by using one or more of a satellite broadcast system information block 1 (system information block 1, SIB 1) message, a radio resource control (radio resource control, RRC) message sent by a satellite to a terminal device, or an inter-cell message XnAP used by satellites. In an implementation, the power offset information is carried by using the SIB1 or RRC information. The reference point, the beam width, and the power offset are used as an example. In this embodiment of this application, the power offset information is named a PositioningEnhancement information element. A format of the power offset information carried by the SIB1 or RRC information is as follows:

```
PositioningEnhancement information element
-- ASN1STOP -- ASN1START
-- TAG-PositioningEnhancement-START
PositioningEnhancement::=            SEQUENCE {
    Ref_location      {N1}
    Beamwidth         {N2}
    Power_offset      {N3}
}
-- TAG-PositioningEnhancement-STOP
-- ASN1STOP
```

For example, the serving satellite sends the positioning assistance information to at least one neighboring satellite. The SIB 1 information is used to carry the power offset information, and a format of the SIB 1 information is as follows:

```
SIB1 information element
-- ASN1STOP -- ASN1START
-- TAG-SIB1-START
PositioningEnhancement::=                    SEQUENCE {
    Ref_location              {N1}
    Beamwidth                 {N2}
    Power_offset              {N3}
}
-- TAG-SIB1-STOP
-- ASN1STOP
```

In another implementation, an inter-cell message XnAP is used for information transmission. Information such as a reference point, a reference elevation angle, a reference azimuth angle, a power offset, and a beam width of a target beam/cell is provided, so that power adjustment is performed on a neighboring satellite that sends an assisting beam in the corresponding target beam/cell. For example, as shown in Table 1, provided is relevant assisting positioning information for positioning of the beam (cell 2, beam 0) of the satellite 2 assisting the beam (cell 0, beam 0) of the satellite 1, and the beam (cell 2, beam 1) of the satellite 2 assisting the beam (cell 0, beam 1) of the satellite 1.

**Table 1 NTN beam hopping positioning assistance information**

| Target beam/cell | Cell 0, beam 0 | Cell 0, beam 1 |
|---|---|---|
| Reference point | Ref_location_0 | Ref_location_1 |
| Reference elevation angle | Ref_ele_0 | Ref_ele_1 |
| Reference azimuth angle | Ref_azi_0 | Ref_azi_1 |
| Power (offset) | Power_offset_0 | Power_offset_1 |
| Beam width | Beamwidth_0 | Beamwidth_1 |

Table 1 provides assistance information for positioning of the satellite 2 assisting the satellite 1 (cell 0, beam 0) and the satellite 2 assisting the satellite 1 (cell 0, beam 1). The satellite 1 sends, to the satellite 2 by using the inter-cell message XnAP, assistance information used to determine the power offset information. After receiving the inter-cell message XnAP, the satellite 2 may determine, based on a target beam, power offset information for sending a positioning signal to the target beam, determine a transmit power based on the power offset information, and send an assisting positioning signal to the target beam of the satellite 1 at the determined transmit power. In this application, assisting positioning may also be referred to as assistive positioning or the like. This is not limited herein.

As shown in Table 2, provided is relevant positioning information for positioning of the satellite 2 (cell 2, beam 2) assisting the satellite 3 (cell 1).

**Table 2 NTN beam hopping positioning assistance information**

| Target beam/cell | Cell 1 |
|---|---|
| Reference point | Ref_location_2 |
| Reference elevation angle | Ref_ele_2 |
| Reference azimuth angle | Ref_azi_2 |
| Power (offset) | Power_offset_2 |
| Beam width | Beamwidth_2 |

Specifically, Table 2 provides assistance information for positioning of the satellite 2 assisting the satellite 3 (cell 1). The satellite 3 sends, to the satellite 2 by using the inter-cell message XnAP, assistance information used to determine the power offset information. After receiving the inter-cell message XnAP, the satellite 2 may determine, based on a target cell, power offset information of a beam sent to the target cell, and send an assisting positioning signal to the target cell of the satellite 3 at an adjusted transmit power

It can be learned from Table 1 and Table 2 that the assisting positioning may be performed at a beam level, or may be performed at a cell level. For example, the satellite 2 in Table 1 may use different beams to assist different beams of the satellite. To be specific, the satellite 2 (cell 2, beam 0) assists the satellite 1 (cell 0, beam 0) in positioning, and the satellite 2 (cell 2, beam 1) assists the satellite 1 (cell 0, beam 1) in positioning. In Table 2, the satellite 2 uses a beam to assist a cell of the satellite 3 in positioning. To be specific, the satellite 2 (cell 2, beam 2) assists the satellite 3 (cell 1) in positioning.

The neighboring satellite determines the transmit power of the assisting positioning beam based on the power offset information, and sends the positioning signal at the transmit power. In a possible implementation, the serving satellite determines the power offset information based on the foregoing power configuration method. The serving satellite sends, by using system broadcast information SIB1, the inter-cell message XnAP, or the like, the power offset information to a neighboring satellite that transmits the assisting positioning beam. The neighboring satellite adjusts, based on the power offset information in a received signal, a power for transmitting the assisting positioning beam.

To be specific, the power configuration method provided in this embodiment of this application is used to determine the power offset information in the positioning assistance information, the at least one second satellite determines the transmit power of the second beam based on the power offset information in the positioning assistance information sent by the first satellite, and a second positioning signal is sent at the transmit power. To be specific, when the serving satellite positions the terminal device, at least one neighboring satellite of the serving satellite determines, based on the power offset information, a power of a beam transmitted by the at least one neighboring satellite of the serving satellite, and the assisting positioning signal is sent at the transmit power. Specifically, when the serving satellite performs positioning on the terminal device, the neighboring satellite of the serving satellite assists in the positioning, to improve positioning precision. To be specific, different beams simultaneously strike at the positioning reference point of the target area, and the target area is the cell in which the to-be-positioned UE is located. The positioning reference point may be any location of the target area, for example, the center point of the target area. The positioning reference point is located within the coverage area of the first beam, and is determined by the first satellite. In other words, the positioning reference point is determined by the serving satellite, and is located within the coverage area of the beam transmitted by the serving satellite. The positioning reference point is sent to the at least one second satellite by using the positioning assistance information, and the at least one second satellite adjusts the coverage area of the second beam of the second satellite based on the positioning reference point, so that the second beam covers the positioning reference point. To be specific, the at least one neighboring satellite of the serving satellite adjusts the coverage area of the beam transmitted by the serving satellite based on a received positioning reference point sent by the serving satellite, so that the beam of the serving satellite covers the positioning reference point. The positioning assistance information is sent by using a message such as the system broadcast information SIB1 or the inter-cell message XnAP.

For example, as shown in FIG. 3, the satellite 2 uses the beam (cell 2, beam 0) to assist the satellite 1 (cell 0, beam 0) in positioning, and beam power offset information of the assisting positioning beam (cell 2, beam 0) of the satellite 2 is determined by the satellite 1. Specifically, when the satellite 1 positions the terminal device in the coverage area of the satellite 1, the neighboring satellite 2 of the satellite 1 assists in the positioning to improve positioning precision. To be specific, the satellite 2 changes the coverage area of the positioning beam of the satellite 2 based on the positioning reference point in the positioning assistance information sent by the satellite 1, so that the positioning beam of the satellite 2 covers the positioning reference point determined by the satellite 1. The satellite 2 determines, based on the power offset information in the positioning assistance information sent by the satellite 1, the transmit power of the positioning beam sent by the satellite 2, and the assisting positioning signal of the satellite 2 is sent at the transmit power. Alternatively, as shown in FIG. 3, the satellite 2 uses the beam (cell 2, beam 2) to assist the satellite 3 (cell 1) in positioning, and beam power offset information of the assisting positioning beam (cell 2, beam 2) of the satellite 2 is determined by the satellite 3. Specifically, when the satellite 3 positions the terminal device in the coverage area of the satellite 3, the neighboring satellite 2 of the satellite 3 assists in the positioning to improve positioning precision. To be specific, the satellite 2 changes the coverage area of the positioning beam of the satellite 2 based on the positioning reference point in the positioning assistance information sent by the satellite 3, so that the positioning beam of the satellite 2 covers the positioning reference point determined by the satellite 3. The satellite 2 determines, based on the power offset information in the positioning assistance information sent by the satellite 3, the transmit power of the positioning beam sent by the satellite 2, and the assisting positioning signal of the satellite 2 is sent at the transmit power.

In another possible implementation, the neighboring satellite that transmits the assisting positioning beam may determine the power offset information of the assisting positioning beam based on the foregoing power configuration method, and adjust, based on the power offset information determined by the neighboring satellite, the power for transmitting the assisting positioning beam. The assisting positioning signal is sent at the transmit power.

For example, as shown in FIG. 3, the satellite 2 uses the beam (cell 2, beam 0) to assist the satellite 1 (cell 0, beam 0) in positioning, and beam power offset information of the assisting positioning beam (cell 2, beam 0) of the satellite 2 is determined by the satellite 2. Specifically, when the satellite 1 positions the terminal device in the coverage area of the satellite 1, the neighboring satellite 2 of the satellite 1 assists in the positioning to improve positioning precision. To be specific, the satellite 2 adjusts, based on the power offset information determined by the satellite 2, the transmit power of the sent positioning beam, and the assisting positioning signal is sent at the transmit power. Alternatively, as shown in FIG. 3, the satellite 2 uses the beam (cell 2, beam 2) to assist the satellite 3 (cell 1) in positioning, and the beam power offset information of the assisting positioning beam (cell 2, beam 2) of the satellite 2 is determined by the satellite 2. Specifically, when the satellite 3 positions the terminal device in the coverage area of the satellite 3, the neighboring satellite 2 of the satellite 3 assists in the positioning to improve positioning precision. To be specific, the satellite 2 adjusts, based on the power offset information determined by the satellite 2, the transmit power of the sent positioning beam, and the assisting positioning signal is sent at the transmit power

In another possible implementation, the serving satellite or the neighboring satellite that sends the assisting positioning beam determines the power offset information based on the foregoing power configuration method, and sends the power offset information to the terminal device by using a message such as the system broadcast information SIB1 or the radio resource control RRC message. The terminal device adjusts the power of the assisting positioning beam based on frequency offset information in the received signal by using a method such as enhancing an antenna gain.

In this embodiment of this application, the satellite is usually the satellite 101 or the satellite 102 in FIG. 1. In another possible implementation, the satellite is the satellite 103 in FIG. 1. That is, the satellite communication system in this case has a transparent transmission satellite architecture. In an implementation, the power offset information of the assisting positioning beam of the terminal device is determined by the serving satellite. In this case, the serving satellite has a transparent transmission satellite architecture. At this time, the power offset information is determined by a terrestrial station device connected to the serving satellite, and then forwarded by the serving satellite. In another implementation, the power offset information of the assisting positioning beam of the terminal device is determined by the neighboring satellite that transmits the assisting positioning beam. In this case, the neighboring satellite has a transparent transmission satellite architecture. At this time, the power offset information is determined by a terrestrial station device connected to the satellite that transmits the assisting positioning beam, and then forwarded by the neighboring satellite that transmits the assisting positioning beam. In another embodiment of this application, an information processing method in a satellite transparent transmission architecture that may exist in a satellite is similar to the method described in this embodiment of this application. Details are not described herein again.

In this embodiment of this application, a dynamic configuration method for a cell offset is provided. A cellular system reduces interference between neighboring cells by using a cell offset v_shift during positioning. The cell offset is an offset of a time-frequency resource block format used to transmit a positioning reference signal during positioning of the cellular system. A frequency-domain location of a pilot symbol of a cellular network positioning reference signal is related to a PCI code of a cell. Frequency-domain locations of pilot symbols of neighboring cells are staggered as much as possible (an offset is used to indicate a staggering degree), so that interference between pilot symbols can be reduced to some extent. A physical cell identifier (PCI) is used to distinguish radio signals of different cells, to ensure that there is no same physical cell identifier in a coverage area of a related cell. An offset parameter of a cell in an existing cellular system is v_shift = cell ID mod 6, where the cell ID is a physical cell identifier, and mod means a modulo operation.

In a non-terrestrial network such as a satellite system, a satellite is moving in real time. In this dynamically changing scenario, a static binding manner may introduce strong inter-cell interference. That is, in a dynamic non-terrestrial network scenario, cell identifiers between neighboring cells are the same due to a dynamic topology change, which leads to strong interference, and it is difficult to ensure reliable transmission of a positioning reference signal. An embodiment of the present invention provides a method of dynamically adjusting a cell offset. To be specific, in an NTN scenario, a dynamic offset needs to be introduced to adjust frequency offset information and/or polarization mode information of positioning signals of different cells. Specifically, the offset parameter v_shift of the cell is dynamically configured, to dynamically adjust a time-frequency resource pattern occupied by PRS reference signals of different cells and/or polarization modes used by the PRS reference signals of the different cells, thereby suppressing inter-cell interference in the NTN dynamic scenario. In this application, the offset parameter v_shift of the cell includes frequency offset information, polarization mode information, and another implementation in which a signal can be distinguished. This is not limited herein.

To implement dynamic configuration of the cell offset, in one implementation, the offset parameter v_shift of the cell is irrelevant from the cell identifier. In another expression manner, the offset parameter v_shift of the cell is unbound from the cell. In this case, the dynamic cell offset parameter v_shift is calculated as follows:

$$v\_shift = \{0, 1, ..., \text{and } N{-}1\}$$

N is a frequency reuse factor or a polarization reuse factor of a PRS in the NTN scenario, and a value of N is an integer greater than 1. For example, typically, N = 3, 4, or 6, which is not limited herein. The frequency reuse factor indicates a quantity of frequencies in a frequency reuse cluster (Reuse Cluster), or simply, a quantity of frequency offsets.

Polarization reuse is a method of reusing signals by using polarization characteristics of electromagnetic waves. The polarization reuse factor indicates a factor that can be used for different polarization characteristics. Usually, the polarization characteristics include vertical polarization, horizontal polarization, left-handed circular polarization, and right-handed circular polarization. Frequency reuse and polarization reuse can be used alone or in combination. For example, when N = 4, in an implementation, four frequency offsets are used in a frequency domain. In another implementation, signal reuse is performed by using four different polarization characteristics. In another implementation, four different signal reuse modes are generated by using two frequency offsets and two different polarization characteristics in frequency.

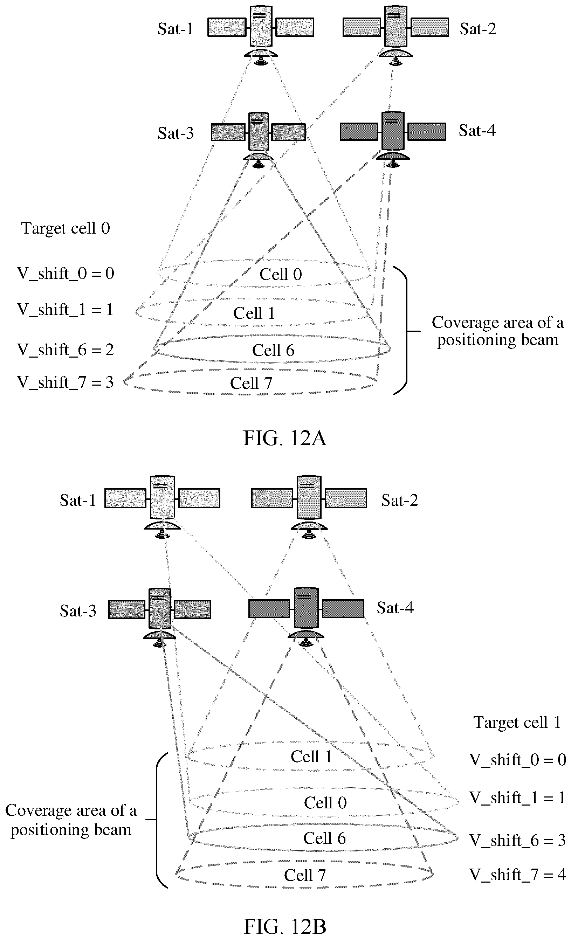

In this embodiment of this application, description is made by using an example in which N = 6. FIG. 12A and FIG. 12B are schematic diagrams of a dynamic configuration method for a cell offset according to an embodiment of this application. As shown in FIG. 12A, a cell identifier of a target cell in which a positioned terminal device is located is 0, that is, a target cell 0. To assist the target cell 0 (that is, a cell 0 of a satellite 1) in positioning, a satellite 2 (that is, a cell 1 of the satellite 2), a satellite 3 (that is, a cell 6 of the satellite 3), and a satellite 4 (that is, a cell 7 of the satellite 4) align positioning beams with a target area of the cell 0. Reliable transmission of reference signals is ensured by dynamically configuring cell offsets v_shift, v_shift_0 = 0, v_shift_1 = 1, v_shift_6 = 2, and v_shift_7 = 3. As shown in FIG. 12B, a cell identifier of a target cell in which a positioned terminal device is located is 1, that is, a target cell 1. To assist the target cell 1 (that is, a cell 1 of a satellite 2) in positioning, a satellite 1 (that is, a cell 0 of the satellite 1), a satellite 3 (that is, a cell 6 of the satellite 3), and a satellite 4 (that is, a cell 7 of the satellite 4) align positioning beams with a target area of the cell 1. Reliable transmission of reference signals is ensured by dynamically configuring cell offsets v_shift, v_shift_0 = 0, v_shift_1 = 1, v_shift_6 = 3, and v_shift_7 = 4. It can be learned from the examples in FIG. 12A and FIG. 12B that v_shift (or v_offset) configurations of a same cell for different target cells may be different. To be specific, when a same cell of a same satellite performs assisting positioning on respective serving cells of different neighboring satellites of the same satellite, an offset parameter v_shift of the same cell may be different.

In another implementation, an offset parameter v_shift of a cell is still related to the cell identifier, but a dynamic offset v_offset is added. In this case, the dynamic cell offset parameter v_shift is calculated as follows:

v_shift = (cell ID+v_offset) mod N
v_offset = {0, 1, ..., and N-1}, N is a frequency reuse factor or a polarization reuse factor of a PRS in the NTN scenario, and a value of N is an integer greater than 1. For example, typically, N = 3, 4, or 6, which is not limited herein. Description of the reuse factor is the same as the foregoing description, and details are not described herein again.

In this case, in FIG. 12A, the satellite 1 has v_offset_0 = 0, the satellite 2 has v_offset_1 = 0, the satellite 3 has v_offset_6 = 2, and the satellite 4 has v_offset_7 = 2. To be specific, the satellite 1 has a dynamic cell offset parameter v_shift_0 = 0, the satellite 2 has a dynamic cell offset parameter v_shift_1 = 1, the satellite 3 has a dynamic cell offset parameter v_shift_6 = 2, and the satellite 4 has a dynamic cell offset parameter v_shift_7 = 3. In FIG. 12B, the satellite 1 has v_offset_0 = 0, the satellite 2 has v_offset_1 = 0, the satellite 3 has v_offset_6 = 3, and the satellite 4 has v_offset_7 = 3. To be specific, the satellite 1 has a dynamic cell offset parameter v_shift_0 = 0, the satellite 2 has a dynamic cell offset parameter v_shift _1 = 1, the satellite 3 has a dynamic cell offset parameter v_shift_6 = 3, and the satellite 4 has a dynamic cell offset parameter v_shift_7 = 4.

The dynamic configuration of the offset parameter value of the cell in this embodiment is merely an example for description, and is not limited in this application. The dynamic configuration method for the cell offset enables offset parameters of cells to be different, thereby reducing interference in reference signal transmission between the cells, so that a positioning reference signal can be reliably transmitted.

In the positioning assistance information, the dynamic cell offset parameter described in the foregoing embodiment may be transmitted by using one or more of satellite broadcast system information SIB, a radio resource control message sent by a satellite to a terminal device, or the like. In an implementation, the dynamic cell offset parameter is carried by using SIB1 information. A possible indication format provided in this embodiment of this application is as follows: SIB1 information element

```
-- ASN1 STOP -- ASN1 START
        -- TAG- SIB1 -START
              V_shift = {0,1,...N-1}
        - TAG- SIB1 -STOP
        -- ASN1STOP
```

In this embodiment of this application, a common offset compensation method for a measurement gap is provided. The common offset compensation method for a measurement gap is applicable to communication between a satellite and a service area of the satellite, positioning, and the like, is also applicable to a satellite assisting a service area of an adjacent satellite of the satellite in positioning, and is also applicable to an application scenario in which a same function can be implemented.

Before cell handover is performed, UE normally measures a power (signal quality) of a target cell and reports the measured power to a network. Based on the measured power, the network determines whether to allow the UE to hand over to the target cell. If the target cell and the current cell have a same frequency, it is intra-frequency measurement. In this case, the signal quality of the target cell is not affected. However, if the target cell and the current cell have different frequencies, it is inter-frequency measurement. In this case, the signal quality of the target cell is affected. Therefore, it is necessary to use a manner of "measurement gap" (measurement gap) for assisting measurement. To be specific, a part of time (that is, a measurement GAP time) is reserved, and the UE does not send or receive any data during the time. Instead, the UE adjusts a receiver to a frequency of the target cell to perform inter-frequency measurement. When the GAP time ends, the UE adjusts the receiver back to the current cell (continues to send and receive data). In a cellular network, a measurement GAP of the inter-frequency is 6 ms, of which about 4 ms may be used for measuring PRS signals. It takes 1 ms to perform frequency switching at each of the start and end of the measurement GAP. In an NTN network, an existing measurement gap is insufficient due to a large delay, and a common offset mg_common needs to be added to compensate for the measurement gap.

In a possible implementation, when a satellite sends a positioning signal to a terminal in a service area of the satellite, a serving satellite determines time domain compensation information, and determines a time domain location based on the time domain compensation information. The positioning signal is sent at the time domain location, and the time domain compensation information is used to indicate a common offset of a measurement gap of the serving satellite. In another possible implementation, when a neighboring satellite of the serving satellite assists the serving satellite in positioning, corresponding to a positioning reference point of the serving satellite, different measurement gaps are configured for assisting positioning beams sent by different neighboring satellites. To be specific, different common offsets of measurement values are configured for different assisting positioning beams sent by different neighboring satellites, to adapt to measurement and reporting of related parameters (such as a delay, an angle, and a frequency) in a non-terrestrial network. In this case, the common offset of the measurement gap is time domain compensation information in positioning assistance information. The time domain compensation information is used to compensate for the measurement gap that needs to increase the common offset, so that the positioning method can be applied to a large delay scenario of NTN.

For an existing measurement gap (measurement gap), the common offset mg_common needs to be added to compensate for the measurement gap. A measurement gap after compensation is mg_total, which is calculated as follows:

mg_total = mgl + mg_common

mgl is a partial offset, the partial offset is an offset value obtained through measurement, and mg_total is a total measurement gap.

A common offset mg_common that needs to be added for performing measurement gap compensation is determined. In a possible implementation, the common offset mg_common may be compensated by using a network side. The network side includes a serving satellite of a terminal device, a neighboring satellite that performs assisting positioning, and the like. Both the serving satellite and the neighboring satellite need to perform compensation based on a common offset of their respective measurement gap. For example, the serving satellite determines a common offset of a measurement gap of the serving satellite, determines, based on the common offset, a time domain location of the positioning signal sent by the serving satellite, and sends the positioning signal at the time domain location. The neighboring satellite may use the time domain compensation information in the positioning assistance information sent by the serving satellite, that is, the common offset of the measurement gap used by the neighboring satellite to assist the serving satellite in positioning. Alternatively, the neighboring satellite determines the common offset of the measurement gap used by the neighboring satellite to assist the serving satellite in positioning. Then, the time domain location of the positioning signal in the assisting positioning beam sent by the neighboring satellite is determined based on the determined common offset, and the positioning signal is sent at the time domain location. In another implementation, the common offset mg_common is compensated for the measurement gap by the terminal device. In this case, the common offset mg_common is delivered by the network side to the terminal device by using a broadcast message SIB or an RRC message. In this embodiment of this application, the common offset is named a MeasurementConfig information element. A format of the MeasurementConfig information element carried by the SIB1 or RRC message is as follows:

MeasurementConfig information element

```
-- ASN1STOP -- ASN1START
-- TAG-MeasurementConfig-START
MeasurementConfig::=                    SEQUENCE {
Mg_Common              {N4}
}
-- TAG-MeasurementConfig-STOP
-- ASN1STOP
```

For example, if SIB1 information is used to carry the common offset of the measurement gap, that is, the time domain compensation information, a format of the SIB 1 information is as follows:
SIB1 information element

```
-- ASN1STOP -- ASN1START
-- TAG-SIB1-START
MeasurementConfig::=                    SEQUENCE {
Mg_Common              {N4}
}
-- TAG-SIB1-STOP
-- ASN1STOP
```

A terminal receives the common offset mg_common, determines, based on the common offset, a time domain location for receiving the positioning signal, and receives the positioning signal at the time domain location. The positioning signal may be a first positioning signal or a second positioning signal, that is, a positioning signal sent by a serving satellite or an assisting positioning signal sent by at least one neighboring satellite.

A reporting range (or a report range) of positioning measurement in an existing cellular positioning technology is represented as [T1, T2] or [-T1, T1]. A maximum value of the reporting range of the measurement value is a difference between a minimum value and a maximum value of [T1, T2]. The maximum value of the measurement range in the existing cellular positioning technology is 0.5 ms. Because of a large delay of NTN, the reporting range of the existing positioning measurement is insufficient.

In this embodiment of this application, a compensation method for a reporting range is further provided. To be specific, reporting compensation information for each target satellite is added, to adapt to reporting of a positioning parameter (such as a delay, an angle, and a frequency) in a non-terrestrial network, that is, reporting compensation information in the positioning assistance information. The network side delivers a reporting range compensation amount for each target satellite. In other words, the network side delivers a reporting range compensation amount for each target cell, or the network side delivers a reporting range compensation amount for each target beam. This is not limited in this application. The reporting compensation information may be delivered to the terminal device by using the broadcast message SIB or the RRC message. The terminal device determines, based on the reporting compensation information sent by the network side, a reporting parameter sent to the network side. The reporting parameter is determined by the positioning parameter based on the reporting compensation information. The reporting compensation information is used to solve a problem that a reporting range of positioning measurement is insufficient due to a large delay of NTN, so that the positioning method can be applied to an NTN scenario.

The positioning parameter is obtained by the terminal through measurement based on the first positioning signal and the at least one second positioning signal. The first positioning signal is a positioning signal sent by the serving satellite, and the at least one second positioning signal is an assisting positioning signal sent by at least one second satellite, that is, an assisting positioning signal sent by at least one neighboring satellite. A positioning parameter value includes one or more of a time of arrival ToA, a frequency of arrival FoA, an angle of arrival AoA, and a signal strength of arrival SSoA.

In an implementation, the terminal receives reporting compensation information sent by the serving satellite, determines a reporting parameter based on the reporting compensation information and the positioning parameter, and sends the reporting parameter to the serving satellite. The reporting parameter is determined by the positioning parameter based on the reporting compensation information. The serving satellite determines the location information of the terminal based on the received reporting parameter, and sends the location information to the terminal. The reporting compensation information is used to indicate a common offset of a reporting range of the positioning parameter, and the serving satellite of the terminal is the first satellite. In another implementation, the terminal may directly determine the location information of the terminal based on the positioning parameter

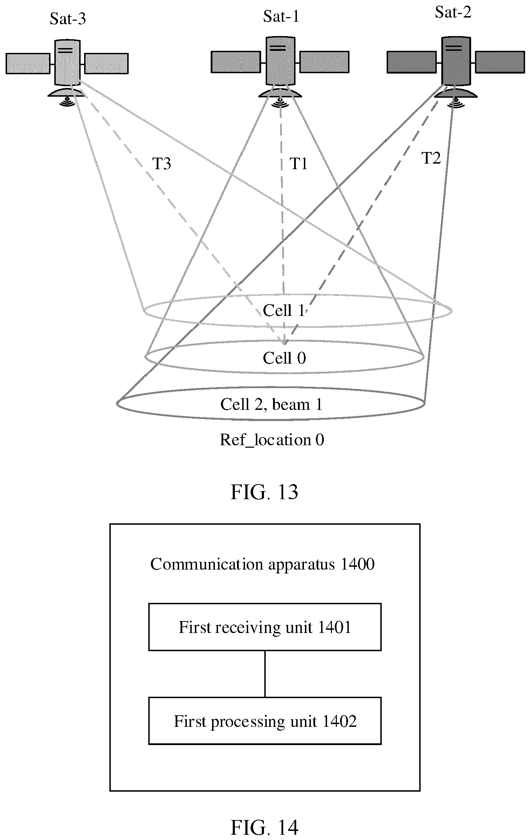

FIG. 13 is a schematic diagram of a time difference compensation amount according to an embodiment of this application. To assist positioning of a satellite 1 (that is, a cell 0), compensation amounts of a satellite 2 and a satellite 3 need to be separately delivered. For example, a compensation amount of the satellite 2 is T1 -T2 (or T2-T1), and a compensation amount of the satellite 3 is T1-T3 (or T3-T1). T1, T2, and T3 are respectively unidirectional (or bidirectional) propagation delays from the satellite 1, the satellite 2, and the satellite 3 to the target reference location Ref_location_0.

In this embodiment of this application, a time compensation amount is described by using a TDOA technology as an example. Alternatively, a frequency, an angle, and the like may be compensated based on ADoA, FDoA, and the like. This is not limited in this application.

The following mainly describes solutions provided in the embodiments of this application from a perspective of a communication apparatus. It may be understood that, to implement the foregoing functions, the communication apparatus includes a corresponding hardware structure and/or a software module for performing each function. A person skilled in the art should be easily aware that, in combination with example modules and algorithm steps described in the embodiments disclosed in this specification, this application can be implemented by using hardware or a combination of hardware and computer software. Whether a function is performed by hardware or hardware driven by computer software depends on a particular application and a design constraint of technical solutions. A person skilled in the art may use different methods to implement the described functions for each particular application, but it should not be considered that the implementation goes beyond the scope of this application.

A positioning method in a satellite network described in this application may alternatively be a positioning method applied in a non-terrestrial network such as high-altitude platform station communication or an unmanned aerial vehicle, or may be a positioning method applied in a communication or positioning network that can use the positioning method other than the non-terrestrial network. This is not limited herein. In this embodiment of this application, a first satellite is used as an example for description. The first satellite may also be a first device, or may be replaced with a high-altitude platform station, an unmanned aerial vehicle, or the like. This is not limited herein.

FIG. 14 shows a communication apparatus 1400 according to this application. The apparatus 1400 may be the terminal or a part of the terminal in the foregoing embodiments or in FIG. 6, and is configured to perform the method performed by the terminal. The apparatus includes a first receiving unit 1401 and a first processing unit 1402.

The first receiving unit 1401 is configured to receive a first positioning signal sent by the first satellite by using a first beam and a second positioning signal sent by a second satellite by using a second beam.

The terminal is located within a coverage area of the first beam of the first satellite and a coverage area of the second beam of at least one second satellite. The first satellite is a serving satellite of the terminal. The coverage area of the second beam is determined by the at least one second satellite based on positioning assistance information. The positioning assistance information is sent by the first satellite to the at least one second satellite. The positioning assistance information includes a first reference location of the first beam. The first reference location is within the coverage area of the second beam and/or a second reference location of the second beam is within the coverage area of the first beam.

The first processing unit 1402 is configured to measure a positioning parameter based on the first positioning signal and the second positioning signal.

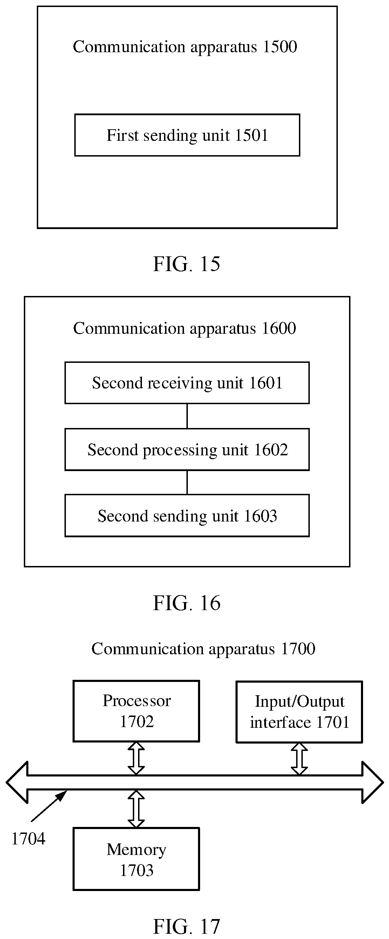

FIG. 15 shows another communication apparatus 1500 according to this application. The apparatus 1500 may be the first satellite or a part of the first satellite in the foregoing embodiments or in FIG. 6, and is configured to perform the method performed by the first satellite. The apparatus includes a first sending unit 1501.

The first sending unit 1501 is configured to send a first positioning signal to a terminal by using a first beam. The terminal is located within a coverage area of the first beam, and the first satellite is a serving satellite of the terminal.

The first sending unit 1501 is further configured to send positioning assistance information to at least one second satellite. The positioning assistance information is used to determine a coverage area of a second beam of the at least one second satellite. The positioning assistance information includes a first reference location of the first beam. The first reference location of the first beam is within the coverage area of the second beam and/or a second reference location of the second beam is within the coverage area of the first beam.

FIG. 16 shows a communication apparatus 1600 according to this application. The apparatus 1600 may be the second satellite or a part of the second satellite in the foregoing embodiments or in FIG. 6, and is configured to perform the method performed by the second satellite. The apparatus includes a second receiving unit 1601, a second processing unit 1602, and a second sending unit 1603.

The first receiving unit 1601 is configured to receive positioning assistance information sent by a first satellite. The positioning assistance information includes a first reference location of a first beam of the first satellite.

The second processing unit 1602 is configured to determine a coverage area of a second beam of the second satellite based on the first reference location. The first reference location of the first beam is within the coverage area of the second beam and/or a second reference location of the second beam is within a coverage area of the first beam.

The second sending unit 1603 is configured to send a second positioning signal to a terminal by using the second beam. The terminal is located within the coverage area of the first beam of the first satellite. The first satellite is a serving satellite of the terminal.

Any possible implementation that may be performed by any communication apparatus or a unit in any communication apparatus shown in FIG. 14 to FIG. 16 includes the following.

For example, the first reference location and the second reference location are determined according to a same rule, the first reference location is within the coverage area of the first beam, and the second reference location is located within the coverage area of the second beam.

For example, a distance between the second reference location and the first reference location is less than or equal to a preset threshold, and the preset threshold is less than a diameter of the first beam.

For example, the preset threshold is a radius of the first beam, one half of the radius of the first beam, one third of the radius of the first beam, one quarter of the radius of the first beam, or one eighth of the radius of the first beam.

For example, the first reference location is at a center point of the coverage area of the first beam, and the second reference location is at a center point of the coverage area of the second beam.

For example, the positioning assistance information includes power offset information. A transmit power of the second beam is determined by the at least one second satellite based on the power offset information, and the second positioning signal is sent at the transmit power

For example, the positioning assistance information includes frequency offset information, and the second positioning signal is sent by the at least one second satellite at a frequency location determined based on the frequency offset information; and/or the positioning assistance information includes polarization mode information, and the second positioning signal is sent by the at least one second satellite based on the polarization mode information.

For example, the frequency offset information is determined from a preset first range, and frequency offset information used by the first beam to send the first positioning signal is different from frequency offset information used by the second beam to send the second positioning signal; and/or the polarization mode information is determined from a preset second range, and polarization mode information used by the first beam to send the first positioning signal is different from polarization mode information used by the second beam to send the second positioning signal.

For example, first time domain compensation information is determined by the first satellite, a first time domain location is determined by the first satellite based on the first time domain compensation information, the first positioning signal is sent at the first time domain location, and the first time domain compensation information is used to indicate a common offset of a measurement gap of the first satellite. Alternatively, the terminal receives the first time domain compensation information sent by the first satellite, and receives the first positioning signal at the first time domain location determined based on the first time domain compensation information.

For example, the positioning assistance information includes second time domain compensation information, a second time domain location is determined by the at least one second satellite based on the second time domain compensation information, the second positioning signal is sent at the second time domain location, and the second time domain compensation information is used to indicate a common offset of a measurement gap of the second satellite. Alternatively, the terminal receives the second time domain compensation information sent by the at least one second satellite, and receives the second positioning signal at the second time domain location determined based on the second time domain compensation information.

For example, the positioning parameter includes one or more of a time of arrival ToA, a frequency of arrival FoA, an angle of arrival AoA, and a signal strength of arrival SSoA.

For example, the terminal determines location information of the terminal based on the positioning parameter. Alternatively, the terminal receives reporting compensation information sent by the first satellite, determines a reporting parameter based on the reporting compensation information and the positioning parameter, and sends the reporting parameter to the first satellite. The first satellite determines the location information and sends the location information to the terminal, and the reporting compensation information is used to indicate a common offset of a reporting range of the positioning parameter.

For example, the positioning assistance information is carried in a message such as a system information block SIB message or an inter-cell message XnAP message.

For example, the reporting compensation information is carried in a message such as a radio resource control RRC message or a system information block SIB message.

For example, the power offset information may be determined based on a power that is of the first beam and that is received by the terminal, a beam width of the second beam, a gain of a transmit end, a gain of a receive end, large-scale loss, other loss, and the like.

Optionally, the beam width of the second beam may be replaced with a parameter such as a beam opening angle of the second beam or the coverage area of the second beam.

For example, the second satellite may be a neighboring satellite of the first satellite.

In the foregoing implementations, the first receiving unit 1401 and another possible sending unit may also be integrated into one transceiver unit, the first sending unit 1501 and another possible receiving unit may also be integrated into one transceiver unit, and the second receiving unit 1601 and the second sending unit 1603 may also be integrated into one transceiver unit, and have both of a receiving function and a sending function. This is not limited herein.

Optionally, in an example, the second receiving unit 1601 in the communication apparatus 1600 may be a receiver, and the second sending unit 1603 may be a transmitter. Alternatively, the receiver and the transmitter may be integrated into a transceiver.

Optionally, in an example, the communication apparatus 1600 may be a chip or an integrated circuit. In this case, the second receiving unit 1601 and the second sending unit 1602 may be a communication interface or an interface circuit. For example, the second receiving unit 1601 is an input interface or an input circuit, and the second sending unit 1603 is an output interface or an output circuit.

Optionally, in an example, the second processing unit 1602 is configured to perform processing and/or operations to be implemented in the communication apparatus except the sending and receiving actions.

In the foregoing implementations, the processing unit may be a processing apparatus. In an example, the second processing unit 1602 may be a processing apparatus. A function of the processing apparatus may be implemented by hardware, or may be implemented by hardware executing corresponding software. For example, the processing apparatus may include at least one processor and at least one memory. The at least one memory is configured to store a computer program. The at least one processor reads and executes the computer program stored in the at least one memory, so that the communication apparatus 1600 performs the operations and/or processing performed on a second satellite side in the foregoing embodiments.

Optionally, the processing apparatus may include only the processor, and the memory configured to store the computer program is located outside the processing apparatus. The processor is connected to the memory through a circuit/wire, to read and execute the computer program stored in the memory.

Optionally, in some examples, the processing apparatus may alternatively be a chip or an integrated circuit. For example, the processing apparatus includes a processing circuit/logic circuit and an interface circuit. The interface circuit is configured to: receive a signal and/or data, and transmit the signal and/or the data to the processing circuit. The processing circuit processes the signal and/or the data, so that operations and/or processing performed by the terminal device in the method embodiments are performed.

FIG. 17 is a schematic diagram of a communication apparatus 1700 according to an embodiment of this application. The apparatus 1700 may be an application-specific integrated circuit, one or more FPGAs (field-programmable gate arrays), a PLD (programmable logic device), a controller, a state machine, gate logic, a discrete hardware component, any other appropriate circuit, any combination of circuits that can perform various functions described in this application, a chip, a board, a communication device, or the like. The apparatus 1700 is configured in the first satellite, the second satellite, or the apparatuses in the terminal in the foregoing embodiments or in FIG. 6, and may be configured to perform the operations performed in the foregoing embodiments. As shown in FIG. 17, the apparatus 1700 includes an input/output interface 1701, a processor 1702, and a memory 1703. The input/output interface 1701, the processor 1702, and the memory 1703 may be connected by using a bus system 1704.

The memory 1703 is configured to store a program, an instruction, or code. The processor 1702 is configured to execute the program, the instruction, or the code in the memory 1703, to control the input/output interface 1701 to receive or send a signal and implement the steps and the functions implemented by a first device or a second device in the implementation corresponding to the foregoing embodiment. Details are not described herein again. For specific implementations of the input/output interface 1701 and the processor 1702, refer to the foregoing embodiments or specific description of the first satellite, the second satellite, or the terminal in FIG. 6. Details are not described herein again.

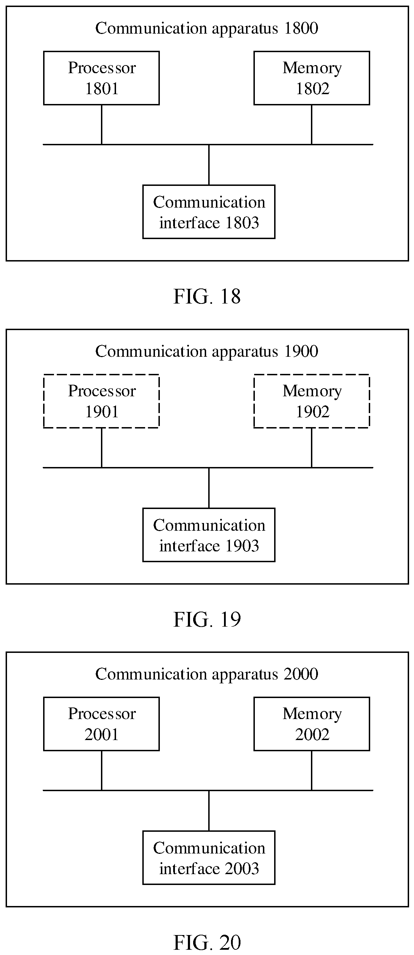

FIG. 18 is a schematic diagram of a structure of a communication apparatus 1800 according to this application. As shown in FIG. 18, the communication apparatus 1800 includes one or more processors 1801, one or more memories 1802, and one or more communication interfaces 1803. The processor 1801 is configured to control the communication interface 1803 to receive and send a signal. The memory 1802 is configured to store a computer program. The processor 1801 is configured to invoke the computer program from the memory 1802 and run the computer program, to cause the procedures and/or the operations performed by the terminal in the method embodiments of this application to be performed.

For example, the processor 1801 may have a function of the first processing unit 1402 shown in FIG. 14, and the communication interface 1803 may have a function of the first receiving unit 1402 shown in FIG. 14. Specifically, the processor 1801 may be configured to perform the processing or operations internally performed by the terminal device in the method embodiments of this application, and the communication interface 1803 is configured to perform the receiving actions performed by the terminal in the method embodiments of this application.

In an implementation, the communication interface 1803 in the communication apparatus 1800 may be a transceiver. The transceiver may include a receiver and a transmitter. Optionally, the processor 1801 may be a baseband apparatus, and the communication interface 1803 may be a radio frequency apparatus. In another implementation, the communication apparatus 1800 may be a chip or an integrated circuit. In this implementation, the communication interface 1803 may be an interface circuit or an input/output interface.

FIG. 19 is a schematic diagram of a structure of a communication apparatus 1900 according to this application.

As shown in FIG. 19, the communication apparatus 1900 includes one or more communication interfaces 1903. It should be understood that the communication apparatus 1900 may further include one or more processors 1901 and one or more memories 1902. The processor 1901 is configured to control the communication interface 1903 to receive and send a signal. The memory 1902 is configured to store a computer program. The processor 1901 is configured to invoke the computer program from the memory 1902 and run the computer program, to cause the procedures and/or the operations performed by the first satellite device in the method embodiments of this application to be performed.

For example, the communication interface 1903 may have a function of the first sending unit 1501 shown in FIG. 15. Specifically, the communication interface 1903 is configured to perform the sending actions performed by the first satellite in FIG. 15.

In an implementation, the communication apparatus 1900 may be the first satellite in the method embodiments. In this implementation, the communication interface 1903 may be a transceiver. The transceiver may include a receiver and a transmitter. Optionally, the processor 1901 may be a baseband apparatus, and the communication interface 1903 may be a radio frequency apparatus. In another implementation, the communication apparatus 1900 may be a chip or an integrated circuit installed in a network device. In this implementation, the communication interface 1903 may be an interface circuit or an input/output interface.

FIG. 20 is a schematic diagram of a structure of a communication apparatus 2000 according to an embodiment of this application. As shown in FIG. 20, the communication apparatus 2000 includes one or more processors 2001, one or more memories 2002, and one or more communication interfaces 2003. The processor 2001 is configured to control the communication interface 2003 to receive and send a signal. The memory 2002 is configured to store a computer program. The processor 2001 is configured to invoke the computer program from the memory 2002 and run the computer program, to cause the procedures and/or the operations performed by the second satellite in the method embodiments of this application to be performed.

For example, the processor 2001 may have a function of the second processing unit 1602 shown in FIG. 16, and the communication interface 2003 may have a function of the second receiving unit 1602 shown in FIG. 16. Specifically, the processor 2001 may be configured to perform the processing or operations internally performed by the second satellite in the method embodiments of this application, and the communication interface 2003 is configured to perform the sending and/or receiving actions performed by the second satellite in the method embodiments of this application.

In an implementation, the communication interface 2003 in the communication apparatus 2000 may be a transceiver. The transceiver may include a receiver and a transmitter. Optionally, the processor 2001 may be a baseband apparatus, and the communication interface 2003 may be a radio frequency apparatus. In another implementation, the communication apparatus 2000 may be a chip or an integrated circuit. In this implementation, the communication interface 2003 may be an interface circuit or an input/output interface.

Optionally, the memory and the processor in the foregoing apparatus embodiments may be physically independent units, or the memory may be integrated into the processor. This is not limited in this specification.

In addition, this application further provides a communication apparatus, configured to perform the operations and/or procedures performed by any possible communication apparatus of the terminal device, the first satellite, or the second satellite in the foregoing embodiments. Specifically, the apparatus is configured to perform the methods and execute the units in the methods in the foregoing embodiments.

Optionally, the communication apparatus includes a processor, configured to perform the method in any possible implementation of the terminal device, the first satellite, or the second satellite in the foregoing embodiments. Specifically, the processor is configured to perform the methods and execute the units in the methods in the foregoing embodiments.

Optionally, the processor is configured to execute computer program instructions, to implement the method in any one of the terminal device, the first satellite, or the second satellite in the foregoing embodiments. Specifically, the methods and the units in the methods described in the foregoing embodiments are implemented.

Optionally, the computer program is stored in a memory.

Optionally, the memory is located within the communication apparatus.

Optionally, the memory is located outside the communication apparatus.

In addition, this application further provides a computer-readable storage medium. The computer-readable storage medium stores computer instructions. When the computer instructions are run on a computer, operations and/or procedures performed by the terminal device in the method embodiments of this application are performed.

This application further provides a computer-readable storage medium. The computer-readable storage medium stores computer instructions. When the computer instructions are run on a computer, the operations and/or procedures performed by the first satellite in the method embodiments of this application are performed.

This application further provides a computer-readable storage medium. The computer-readable storage medium stores computer instructions. When the computer instructions are run on a computer, the operations and/or procedures performed by the second satellite in the method embodiments of this application are performed.

In addition, this application further provides a computer program product. The computer program product includes computer program code or instructions. When the computer program code or the instructions are run on a computer, operations and/or procedures performed by the terminal device in the method embodiments of this application are performed.

This application further provides a computer program product. The computer program product includes computer program code or instructions. When the computer program code or the instructions is/are run on a computer, the operations and/or procedures performed by the first satellite in the method embodiments of this application are performed.

This application further provides a computer program product. The computer program product includes computer program code or instructions. When the computer program code or the instructions is/are run on a computer, the operations and/or procedures performed by the second satellite in the method embodiments of this application are performed.

In addition, this application further provides a chip. The chip includes a processor. A memory configured to store a computer program is disposed independently of a chip, and the processor is configured to execute the computer program stored in the memory, so that an operation and/or processing performed by the terminal device in any method embodiment is performed.

Further, the chip may include a communication interface. The communication interface may be an input/output interface, an interface circuit, or the like. Further, the chip may include the memory.

This application further provides a chip including a processor. The memory configured to store the computer program is independent of the chip. The processor is configured to execute the computer program stored in the memory, so that the operations and/or processing performed by the first satellite in any method embodiment are performed.

Further, the chip may include a communication interface. The communication interface may be an input/output interface, an interface circuit, or the like. Further, the chip may include the memory.

In addition, this application further provides a communication apparatus (for example, may be a chip), including a processor and a communication interface. The communication interface is configured to receive a signal and transmit the signal to the processor, and the processor processes the signal, so that the operations and/or processing performed by the terminal device in any method embodiment are performed.

This application further provides a communication apparatus (which, for example, may be a chip), including a processor and a communication interface. The communication interface is configured to receive a signal and transmit the signal to the processor. The processor processes the signal, so that the operations and/or processing performed by the first satellite in any method embodiment are performed.

This application further provides a communication apparatus (which, for example, may be a chip), including a processor and a communication interface. The communication interface is configured to receive a signal and transmit the signal to the processor. The processor processes the signal, so that the operations and/or processing performed by the second satellite in any method embodiment are performed.

In addition, this application further provides a communication apparatus, including at least one processor, the at least one processor is coupled to at least one memory, and the at least one processor is configured to execute a computer program or instructions stored in the at least one memory, so that the operations and/or processing performed by the terminal device in any method embodiment are performed.

This application further provides a communication apparatus, including at least one processor, the at least one processor is coupled to at least one memory, and the at least one processor is configured to execute a computer program or instructions stored in the at least one memory, so that the operations and/or processing performed by the first satellite in any method embodiment are performed.

This application further provides a communication apparatus, including at least one processor, the at least one processor is coupled to at least one memory, and the at least one processor is configured to execute a computer program or instructions stored in the at least one memory, so that the operations and/or processing performed by the second satellite in any method embodiment are performed.

In addition, this application further provides a communication device, including a processor, a memory, and a transceiver. The memory is configured to store a computer program. The processor is configured to invoke and run the computer program stored in the memory, and control the transceiver to receive and send a signal, so that the terminal device performs the operations and/or processing performed by the terminal device in any method embodiment.

This application further provides a communication device, including a processor, a memory, and a transceiver. The memory is configured to store a computer program. The processor is configured to invoke and run the computer program stored in the memory, and control the transceiver to receive and send a signal, so that the terminal device performs the operations and/or processing performed by the first satellite in any method embodiment.

This application further provides a communication device, including a processor, a memory, and a transceiver. The memory is configured to store a computer program. The processor is configured to invoke and run the computer program stored in the memory, and control the transceiver to receive and send a signal, so that the terminal device performs the operations and/or processing performed by the second satellite in any method embodiment.

In addition, this application further provides a wireless communication system, including the terminal device, the first satellite, and the second satellite in the embodiments of this application.

A processor in the embodiments of this application may be an integrated circuit chip, and has a signal processing capability. In an implementation process, the steps in the foregoing method embodiments are implemented by using a hardware integrated logic circuit in the processor, or by using instructions in a form of software. The processor may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, or a discrete hardware component. The general-purpose processor may be a microprocessor, or the processor may be any conventional processor or the like. The steps of the methods disclosed in the embodiments of this application may be directly presented as being performed and completed by a hardware encoding processor, or performed and completed by a combination of hardware and a software module in an encoding processor. The software module may be located in a mature storage medium in the art, such as a random access memory, a flash memory, a read-only memory, a programmable read-only memory, an electrically erasable programmable memory, or a register. The storage medium is located in the memory, and the processor reads information in the memory and completes the steps in the foregoing methods in combination with hardware of the processor.

A memory in the embodiments of this application may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but non-limiting description, RAMs in many forms are available, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DRRAM). It should be noted that the memory in the systems and methods described herein is intended to include but is not limited to these and any other suitable type of memory.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, the unit division is merely logical function division and may be other division in actual implementation. For example, a plurality of units or components may be combined or integrated into another system, or some features may be omitted or not performed. In addition, the displayed or discussed mutual couplings or direct couplings or communication connections may be implemented by using some interfaces. The indirect couplings or communication connections between the apparatuses or units may be implemented in electrical, mechanical, or another form.

The units described as separate components may be or may not be physically separated, and the components displayed as units may be or may not be physical units, that is, may be located in one place or distributed on a plurality of network units. Some or all of the units may be selected according to actual needs to achieve the objective of the solutions of the embodiments.

In addition, functional units in the embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The software product is stored in a storage medium, and includes several instructions for instructing a computer device (which may be a personal computer, a server, or a network device) to perform all or some of the steps of the methods described in the embodiments of this application.

The term "and/or" in this application describes an association relationship between associated objects and represents that three relationships may exist. For example, A and/or B may represent the following three cases: Only A exists, both A and B exist, and only B exists. The character "/" usually indicates an "or" relationship between associated objects.

In this application, "a plurality of" means two or more.

In the description of this application, terms such as "first" and "second" are only for distinction and description, but cannot be understood as indicating or implying relative importance, or as indicating or implying an order.

In the description of the information element and the information in this application, for clarity and convenience, names or appellations provided are all examples. This is not limited herein.

In addition, in the embodiments of this application, the term such as "exemplary" or "for example" is used to represent giving an example, an illustration, or a description. Any embodiment or design described by "exemplary" or "for example" in this application should not be construed as being preferred or more advantageous over other embodiments or designs. To be precise, the use of the term such as "exemplary" or "for example" is intended to present a related concept in a specific manner.

The foregoing descriptions are merely specific implementations of this application, but the protection scope of this application is not limited thereto. Any variation or replacement readily figured out by persons skilled in the art within the technical scope disclosed in this application shall fall within the protection scope of this application. Therefore, the protection scope of this application shall be subject to the protection scope of the claims.

**Claims**

1. A positioning method in a satellite network, comprising:

sending, by a first satellite, a first positioning signal to a terminal by using a first beam of the first satellite, wherein the terminal is located within a coverage area of the first beam, and the first satellite is a serving satellite of the terminal;

sending, by the first satellite, positioning assistance information to at least one second satellite, wherein the positioning assistance information comprises a first reference location of the first beam;

determining, by the at least one second satellite, a coverage area of a second beam of the second satellite based on the first reference location, and sending a second positioning signal to the terminal by using the second beam, wherein the first reference location of the first beam is within the coverage area of the second beam and/or a second reference location of the second beam is within the coverage area of the first beam; and

measuring, by the terminal, a positioning parameter based on the first positioning signal and the second positioning signal.

2. A positioning method in a satellite network, comprising:

receiving, by a terminal, a first positioning signal sent by a first satellite by using a first beam, and receiving a second positioning signal sent by at least one second satellite by using a second beam; and

measuring, by the terminal, a positioning parameter based on the first positioning signal and the second positioning signal, wherein

the terminal is located within a coverage area of the first beam of the first satellite and a coverage area of the second beam of the at least one second satellite, the first satellite is a serving satellite of the terminal, the coverage area of the second beam is determined by the at least one second satellite based on positioning assistance information, the positioning assistance information is sent by the first satellite to the at least one second satellite, the positioning assistance information comprises a first reference location of the first beam, and the first reference location is within the coverage area of the second beam and/or a second reference location of the second beam is within the coverage area of the first beam.

3. A positioning method in a satellite network, comprising:

sending, by a first satellite, a first positioning signal to a terminal by using a first beam of the first satellite, wherein the terminal is located within a coverage area of the first beam, and the first satellite is a serving satellite of the terminal; and

sending, by the first satellite, positioning assistance information to at least one second satellite, wherein the positioning assistance information is used to determine a coverage area of a second beam of the at least one second satellite, the positioning assistance information comprises a first reference location of the first beam, and the first reference location of the first beam is within the coverage area of the second beam and/or a second reference location of the second beam is within the coverage area of the first beam.

4. A positioning method in a satellite network, comprising:

   receiving, by at least one second satellite, positioning assistance information sent by a first satellite, wherein the positioning assistance information comprises a first reference location of a first beam of the first satellite; determining, by the at least one second satellite, a coverage area of a second beam of the second satellite based on the first reference location, wherein the first reference location of the first beam is within the coverage area of the second beam and/or a second reference location of the second beam is within a coverage area of the first beam; and

   sending, by the at least one second satellite, a second positioning signal to a terminal by using the second beam, wherein the terminal is located within the coverage area of the first beam of the first satellite, and the first satellite is a serving satellite of the terminal.

5. The method according to any one of claims 1 to 4, wherein the first reference location and the second reference location are determined according to a same rule, the first reference location is within the coverage area of the first beam, and the second reference location is within the coverage area of the second beam.

6. The method according to any one of claims 1 to 5, wherein
   a distance between the second reference location and the first reference location is less than or equal to a preset threshold, and the preset threshold is less than a diameter of the first beam.

7. The method according to claim 6, wherein the preset threshold is a radius of the first beam, one half of the radius of the first beam, one third of the radius of the first beam, one quarter of the radius of the first beam, or one eighth of the radius of the first beam.

8. The method according to any one of claims 1 to 7, wherein the first reference location is at a center point of the coverage area of the first beam, and the second reference location is at a center point of the coverage area of the second beam.

9. The method according to any one of claims 1 to 4, wherein the positioning assistance information further comprises: power offset information, wherein a transmit power of the second beam is determined by the at least one second satellite based on the power offset information, and the second positioning signal is sent at the transmit power.

10. The method according to any one of claims 1 to 4, wherein the positioning assistance information further comprises frequency offset information, and the second positioning signal is sent by the at least one second satellite at a frequency location determined based on the frequency offset information; and/or
    the positioning assistance information further comprises polarization mode information, and the second positioning signal is sent by the at least one second satellite based on the polarization mode information.

11. The method according to claim 10, wherein the frequency offset information is determined from a preset first range, and frequency offset information used by the first beam to send the first positioning signal is different from frequency offset information used by the second beam to send the second positioning signal; and/or
    the polarization mode information is determined from a preset second range, and polarization mode information used by the first beam to send the first positioning signal is different from polarization mode information used by the second beam to send the second positioning signal.

12. The method according to any one of claims 1 to 3, wherein
    first time domain compensation information is determined by the first satellite, a first time domain location is determined by the first satellite based on the first time domain compensation information, the first positioning signal is sent at the first time domain location, and the first time domain compensation information indicates a common offset of a measurement gap of the first satellite; or the method further comprises:
    receiving, by the terminal, the first time domain compensation information sent by the first satellite, and receiving the first positioning signal at the first time domain location determined based on the first time domain compensation information.

13. The method according to any one of claim 1, 2 or 4, wherein the positioning assistance information further comprises: second time domain compensation information, wherein a second time domain location is determined by the at least one second satellite based on the second time domain compensation information, the second positioning signal is sent at the second time domain location, and the second time domain compensation information indicates a common offset of a measurement gap of the second satellite; or the method further comprises:
receiving, by the terminal, the second time domain compensation information sent by the at least one second satellite, and receiving the second positioning signal at the second time domain location determined based on the second time domain compensation information.

14. The method according to any one of claim 1 or 2, wherein the method further comprises:

determining, by the terminal, location information of the terminal based on the positioning parameter; or receiving, by the terminal, reporting compensation information sent by the first satellite; determining a reporting parameter based on the reporting compensation information and the positioning parameter; and sending the reporting parameter to the first satellite, wherein the first satellite determines the location information and sends the location information to the terminal, and the reporting compensation information indicates a common offset of a reporting range of the positioning parameter.

15. The method according to claim 9, wherein the power offset information is determined based on the following information:
a power that is of the first beam and that is received by the terminal, a beam width of the second beam, a gain of a transmit end, a gain of a receive end, large-scale loss, and other loss.

16. A communication apparatus, comprising:

a receiving unit, configured for a terminal to receive a first positioning signal sent by a first satellite by using a first beam and a second positioning signal sent by at least one second satellite by using a second beam, wherein the first satellite is a serving satellite of the terminal, a coverage area of the second beam is adjusted by the at least one second satellite based on positioning assistance information, the positioning assistance information comprises a first reference location of the first beam, and the first reference location of the first beam is within the coverage area of the second beam and/or a second reference location of the second beam is within a coverage area of the first beam; and
a processing unit, configured for the terminal to measure a positioning parameter based on the first positioning signal and the second positioning signal.

17. A communication apparatus, comprising:

a sending unit, configured to send a first positioning signal to a terminal by using a first beam, wherein the terminal is located within a coverage area of the first beam, and the first satellite is a serving satellite of the terminal, wherein
the sending unit is further configured to send positioning assistance information to at least one second satellite, the positioning assistance information is used to determine a coverage area of a second beam of the at least one second satellite, the positioning assistance information comprises a first reference location of the first beam, and the first reference location of the first beam is within the coverage area of the second beam and/or a second reference location of the second beam is within the coverage area of the first beam.

18. A communication apparatus, comprising:

a receiving unit, configured to receive positioning assistance information sent by a first satellite, wherein the positioning assistance information comprises a first reference location of a first beam of the first satellite;
a processing unit, configured to determine a coverage area of a second beam of a second satellite based on the first reference location, wherein the first reference location of the first beam is within the coverage area of the second beam and/or a second reference location of the second beam is within a coverage area of the first beam; and
a sending unit, configured to send a second positioning signal to a terminal by using the second beam of the second satellite, wherein the terminal is located within the coverage area of the first beam of the first satellite, and the first satellite is a serving satellite of the terminal.

19. The apparatus according to any one of claims 16 to 18, wherein the first reference location and the second reference location are determined according to a same rule, the first reference location is within the coverage area of the first beam, and the second reference location is within the coverage area of the second beam.

20. The apparatus according to any one of claims 16 to 19, wherein
a distance between the second reference location and the first reference location is less than or equal to a preset threshold, and the preset threshold is less than a diameter of the first beam.

21. The apparatus according to claim 20, wherein the preset threshold is a radius of the first beam, one half of the radius of the first beam, one third of the radius of the first beam, one quarter of the radius of the first beam, or one eighth of the radius of the first beam.

22. The apparatus according to any one of claims 16 to 21, wherein the first reference location is at a center point of the coverage area of the first beam, and the second reference location is at a center point of the coverage area of the second beam.

23. The apparatus according to any one of claims 16 to 18, wherein the positioning assistance information further comprises:
power offset information, wherein the method further comprises: a transmit power of the second beam is determined by the at least one second satellite based on the power offset information, and the second positioning signal is sent at the transmit power.

24. The apparatus according to any one of claims 16 to 18, wherein the positioning assistance information further comprises frequency offset information, and the second positioning signal is sent by the at least one second satellite at a frequency location determined based on the frequency offset information; and/or
the positioning assistance information further comprises polarization mode information, and the second positioning signal is sent by the at least one second satellite based on the polarization mode information.

25. The apparatus according to claim 24, wherein the frequency offset information is determined from a preset first range, and frequency offset information used by the first beam to send the first positioning signal is different from frequency offset information used by the second beam to send the second positioning signal; and/or
the polarization mode information is determined from a preset second range, and polarization mode information used by the first beam to send the first positioning signal is different from polarization mode information used by the second beam to send the second positioning signal.

26. The apparatus according to claim 16 or 17, wherein
first time domain compensation information is determined by the first satellite, a first time domain location is determined by the first satellite based on the first time domain compensation information, the first positioning signal is sent at the first time domain location, and the first time domain compensation information is used to indicate a common offset of a measurement gap of the first satellite; or the method further comprises:
receiving, by the terminal, the first time domain compensation information sent by the first satellite, and receiving the first positioning signal at the first time domain location determined based on the first time domain compensation information.

27. The apparatus according to claim 16 or 18, wherein the positioning assistance information further comprises:
second time domain compensation information, wherein a second time domain location is determined by the at least one second satellite based on the second time domain compensation information, the second positioning signal is sent at the second time domain location, and the second time domain compensation information is used to indicate a common offset of a measurement gap of the second satellite; or the method further comprises:
receiving, by the terminal, the second time domain compensation information sent by the at least one second satellite, and receiving the second positioning signal at the second time domain location determined based on the second time domain compensation information.

28. The apparatus according to claim 16, wherein the method further comprises:

determining, by the terminal, location information of the terminal based on the positioning parameter; or
receiving, by the terminal, reporting compensation information sent by the first satellite; determining a reporting parameter based on the reporting compensation information and the positioning parameter; and sending the reporting parameter to the first satellite, wherein the first satellite determines the location information and sends the location information to the terminal, and the reporting compensation information is used to indicate a common offset of a reporting range of the positioning parameter

**29.** The apparatus according to claim 23, wherein the power offset information is determined by the following information: a power that is of the first beam and that is received by the terminal, a beam width of the second beam, a gain of a transmit end, a gain of a receive end, large-scale loss, and other loss.

**30.** A communication apparatus, comprising a processor and a memory, wherein the processor and the memory are coupled;

the memory is configured to store computer program instructions; and
the processor is configured to execute some or all of the computer program instructions in the memory, and when the some or all of the computer program instructions are executed, the method according to any one of claims 1 to 15 is implemented.

**31.** The communication apparatus according to claim 30, further comprising:
a transceiver, configured to send a signal processed by the processor, or receive a signal and input the signal to the processor.

**32.** The communication apparatus according to any one of claims 16 to 30, wherein the communication apparatus is a chip.

**33.** A communication system, comprising the communication apparatus according to claim 16, the communication apparatus according to claim 17, and the communication apparatus according to claim 18.

**34.** A computer-readable storage medium, wherein the computer storage medium stores computer-readable instructions, and when a computer reads and executes the computer-readable instructions, the computer is enabled to perform the method according to any one of claims 1 to 15.

**35.** A computer program, wherein when a computer reads and executes the computer program, the computer is enabled to perform the method according to any one of claims 1 to 15.

LEO satellite 101    LEO satellite 102    LEO satellite 103

Core network
device

FIG. 1

FIG. 2

FIG. 3

FIG. 4A

FIG. 4B

Sat-3       Sat-1       Sat-2

f2       f1       f3

Positioning slot T       Positioning slot T

**Positioning
broadcast of a target
satellite is turned off**

**Positioning
broadcast of a target
satellite is turned on**

FIG. 5

```
┌──────────────┐        ┌──────────────┐        ┌──────────────┐
│   Terminal   │        │First satellite│       │Second satellite│
│   (group)    │        │              │        │              │
└──────┬───────┘        └──────┬───────┘        └──────┬───────┘
       │                       │                       │
       │                       │  S601: Positioning    │
       │                       │  assistance information│
       │      S602: First      │───────────────────────►
       │   positioning signal  │                       │
       ◄───────────────────────│                       │
       │     S603: Second      │                       │
       │   positioning signal  │                       │
       ◄───────────────────────────────────────────────│
┌──────┴───────────────┐       │                       │
│S604: Measure a       │       │                       │
│positioning           │       │                       │
│parameter based on the│       │                       │
│first                 │       │                       │
│positioning signal and│       │                       │
│the                   │       │                       │
│second positioning    │       │                       │
│signal                │       │                       │
└──────┬───────────────┘       │                       │
       │                       │                       │
```

FIG. 6

○  Beam 1

◌  Beam 2

FIG. 7A

○  Beam 1

◌  Beam 2

FIG. 7B

FIG. 8A

FIG. 8B

FIG. 8C

FIG. 9A

FIG. 9B

Sat-1    Sat-2    Sat-3

Cell 0, beam 0    Cell 0, beam 1    Cell 1

Cell 2, beam 0    Cell 2, beam 1    Cell 2, beam 2

Ref_location 0    Ref_location 1    Ref_location 2

FIG. 10

Ref_location

L

C

beta    theta

R    H

FIG. 11

Sat-1 Sat-2

Sat-3 Sat-4

Target cell 0

V_shift_0 = 0

V_shift_1 = 1

V_shift_6 = 2

V_shift_7 = 3

Cell 0

Cell 1

Cell 6

Cell 7

Coverage area of a
positioning beam

FIG. 12A

Sat-1 Sat-2

Sat-3 Sat-4

Target cell 1

V_shift_0 = 0

V_shift_1 = 1

V_shift_6 = 3

V_shift_7 = 4

Cell 1

Cell 0

Cell 6

Cell 7

Coverage area of a
positioning beam

FIG. 12B

Sat-3  Sat-1  Sat-2

T3  T1  T2

Cell 1

Cell 0

Cell 2, beam 1

Ref_location 0

FIG. 13

Communication apparatus 1400

First receiving unit 1401

First processing unit 1402

FIG. 14

Communication apparatus 1500

First sending unit 1501

FIG. 15

Communication apparatus 1600

Second receiving unit 1601

Second processing unit 1602

Second sending unit 1603

FIG. 16

Communication apparatus 1700

Processor 1702

Input/Output interface 1701

1704

Memory 1703

FIG. 17

Communication apparatus 1800

Processor
1801

Memory
1802

Communication
interface 1803

FIG. 18

Communication apparatus 1900

Processor
1901

Memory
1902

Communication
interface 1903

FIG. 19

Communication apparatus 2000

Processor
2001

Memory
2002

Communication
interface 2003

FIG. 20

## INTERNATIONAL SEARCH REPORT

| | International application No. |
| --- | --- |
| | **PCT/CN2021/143801** |

| **A.** | **CLASSIFICATION OF SUBJECT MATTER** |
| --- | --- |

G01S 19/42(2010.01)i;  H04W 64/00(2009.01)i

According to International Patent Classification (IPC) or to both national classification and IPC

| **B.** | **FIELDS SEARCHED** |
| --- | --- |

Minimum documentation searched (classification system followed by classification symbols)

H04W; H04M; H04Q; H04L; G01S

Documentation searched other than minimum documentation to the extent that such documents are included in the fields searched

Electronic data base consulted during the international search (name of data base and, where practicable, search terms used)

WPABSC; CNTXT; CNABS; WPABS; ENTXT; CJFD; DWPI; 3GPP; ENTXTC; VEN; IEEE: 卫星, 单, 多, 辅助定位, 波束, 定向, 跳, 频, LCS, satellite, location, single, multiple, assistant, beam, directional, hopping, frequency

| **C.** | **DOCUMENTS CONSIDERED TO BE RELEVANT** |
| --- | --- |

| Category* | Citation of document, with indication, where appropriate, of the relevant passages | Relevant to claim No. |
| --- | --- | --- |
| X | CN 111158034 A (MACRO NET COMMUNICATION CO., LTD.) 15 May 2020 (2020-05-15)<br>   description paragraphs [0005]-[0047], figures 1-4, claim 1 | 1-35 |
| A | CN 109690973 A (QUALCOMM INC.) 26 April 2019 (2019-04-26)<br>   entire document | 1-35 |
| A | CN 105158775 A (XIDIAN UNIVERSITY; SPACE STAR TECHNOLOGY CO., LTD.) 16 December 2015 (2015-12-16)<br>   entire document | 1-35 |
| A | US 10158420 B1 (GOGO L.L.C.) 18 December 2018 (2018-12-18)<br>   entire document | 1-35 |

☐ Further documents are listed in the continuation of Box C.    ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **10 March 2022** | **31 March 2022** |

| Name and mailing address of the ISA/CN | Authorized officer |
| --- | --- |
| **China National Intellectual Property Administration (ISA/CN)**<br>**No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

<div align="center">

**INTERNATIONAL SEARCH REPORT**
**Information on patent family members**

</div>

| Patent document cited in search report | | | Publication date (day/month/year) | Patent family member(s) | | | Publication date (day/month/year) |
|---|---|---|---|---|---|---|---|
| CN | 111158034 | A | 15 May 2020 | None | | | |
| CN | 109690973 | A | 26 April 2019 | EP | 3513510 | A2 | 24 July 2019 |
| | | | | EP | 3513510 | B1 | 29 December 2021 |
| | | | | JP | 2019533339 | A | 14 November 2019 |
| | | | | US | 2019245614 | A1 | 08 August 2019 |
| | | | | KR | 20190050785 | A | 13 May 2019 |
| | | | | WO | 2018052744 | A2 | 22 March 2018 |
| | | | | WO | 2018052744 | A3 | 26 April 2018 |
| | | | | BR | 112019004433 | A2 | 28 May 2019 |
| CN | 105158775 | A | 16 December 2015 | None | | | |
| US | 10158420 | B1 | 18 December 2018 | WO | 2019118384 | A1 | 20 June 2019 |
| | | | | US | 2020162150 | A1 | 21 May 2020 |
| | | | | US | 10938472 | B2 | 02 March 2021 |
| | | | | EP | 3725015 | A1 | 21 October 2020 |
| | | | | US | 2019190589 | A1 | 20 June 2019 |
| | | | | US | 10382120 | B2 | 13 August 2019 |
| | | | | US | 2019363782 | A1 | 28 November 2019 |
| | | | | US | 10574340 | B2 | 25 February 2020 |

International application No.

**PCT/CN2021/143801**

Form PCT/ISA/210 (patent family annex) (January 2015)